# EUROPEAN PATENT APPLICATION

(11) **EP 4 177 001 A1**
(43) Date of publication of application: **10.05.2023**
(21) Application number: 20942729.3
(22) Date of filing: 01.07.2020
(51) Int. Cl.: B23K 26/342, B33Y 30/00, B29C 64/20, B29C 64/264, B29C 64/393

(54) **PROCESSING SYSTEM AND OPTICAL DEVICE**

(71) Applicant: NIKON CORPORATION, Minato-ku Tokyo 108-6290 (JP)
(72) Inventor: KURAMI, Toshimitsu, Tokyo 108-6290 (JP); UENO, Kazuki, Tokyo 108-6290 (JP)
(74) Representative: Hoffmann Eitle
(86) International application number: PCT/JP2020/025862
(87) International publication number: WO 2022/003870

(57) **Abstract**

A processing system is configured to form a build object. The processing system includes: a first optical system that condenses an energy beam on a first irradiation position; and
a material supply apparatus that is configured to supply build materials to the first irradiation position. The processing system is capable of forming the build object by irradiating the build materials supplied by the material supply apparatus, with the energy beam from the first optical system, and the processing system processes the build object by a second optical system irradiating a surface of the build object with the energy beam from the first optical system.

## Description

### Technical Field

The present invention relates, for example, to a processing system that is configured to form a build object, and an optical apparatus used in the processing system.

### Background Art

Patent Literature 1 discloses an example of a processing system that is configured to form a build object. One of the technical subjects of such a processing system is to properly form a build object.

### Citation List

### Patent Literature

Patent Literature 1: US2017/0014909A1

### Summary of Invention

A first aspect provides a processing system that is configured to form a build object, the processing system including: a first optical system that condenses an energy beam on a first irradiation position; and a material supply apparatus that is configured to supply build materials to the first irradiation position, the processing system is capable of forming the build object by irradiating the build materials supplied by the material supply apparatus, with the energy beam from the first optical system, and the processing system processes the build object by a second optical system irradiating a surface of the build object with the energy beam from the first optical system.

A second aspect provides a processing system including: a first optical system that irradiates an object with an energy beam; a first housing member that contains the first optical system; a material supply apparatus that is configured to supply build materials to an irradiation position of the energy beam from the first optical system; and a second housing member that is attachable to the first housing member and that contains a second optical system that condenses the energy beam from the first optical system.

A third aspect provides a processing system including: a first optical system that irradiates an object with an energy beam; a first housing member that contains the first optical system; and a material supply apparatus that is configured to supply build materials to an irradiated position of the energy beam from the first optical system, wherein an attachment part for attaching, to the first housing member, a second housing member that contains a second optical system that condenses the energy beam from the first optical system, is formed in the first housing member.

A fourth aspect provides a processing system including: a first optical system that irradiates an object with an energy beam; and a first housing member that contains the first optical system, wherein an attachment part for attaching, to the first housing member, a second housing member that contains a second optical system that condenses the energy beam from the first optical system, is formed in the first housing member.

A fifth aspect provides an optical apparatus that is attachable to a processing system that is configured to form a build object, the processing system including: a first optical system that condenses an energy beam on a first irradiation position; and a material supply apparatus that is configured to supply build materials to the first irradiation position, the processing system forms a build object by supplying the build materials from the material supply apparatus and by using the energy beam from the first optical system, wherein the optical apparatus includes a second optical system for processing the build object by irradiating a surface of the build object with the energy beam from the first optical system.

A sixth aspect provides an optical apparatus that is attachable to a processing system including: a first optical system that irradiates an object with an energy beam; a first housing member that contains the first optical system; and a material supply apparatus that is configured to supply build materials to an irradiation position of the energy beam from the first optical system, wherein the optical apparatus includes a second housing member that is attachable to the first housing member and that contains a second optical system that condenses an energy beam from the first optical system.

A seventh aspect provides a processing system that is configured to form a build object, the processing system including: a first processing apparatus including: a first optical system that condenses an energy beam on a first irradiation position; and a material supply apparatus that is configured to supply build materials to the first irradiation position, the first processing apparatus is capable of forming the build object by irradiating the build materials supplied by the material supply apparatus, with the energy beam from the first optical system; and a second processing apparatus that is configured to process the build object by irradiating a surface of the build object with an energy beam by using a second optical system.

The operation and other advantages of the present invention will be apparent from the following Description of Example Embodiments.

### Brief Description of Drawings

[FIG. 1] FIG. 1 is a cross-sectional view that illustrates a configuration of a processing system in an example embodiment.
[FIG. 2] FIG. 2 is a system configuration diagram that illustrates a system configuration of the processing system in the example embodiment.
[FIG. 3] FIG. 3 is a cross-sectional view that illustrates a configuration of a processing head in the example embodiment.
[FIG. 4] Each of FIG. 4A to FIG. 4E is a cross-sectional view that illustrates a state when a certain area on a workpiece is irradiated with a processing light and build materials are supplied thereto.
[FIG. 5] Each of FIG. 5A to FIG. 5C is a cross-sectional view that illustrates a process for forming a three-dimensional structural object.
[FIG. 6] Each of FIG. 6A to FIG. 6C is a cross-sectional view that illustrates a state of a processing target surface in a process for performing a melting operation (a smoothing operation).
[FIG. 7] Each of FIG. 7A and FIG.7B is a cross-sectional view that illustrates a relative positional relationship between the condensed plane and the processing target surface.
[FIG. 8] FIG. 8 is a cross-sectional view that illustrates a configuration of a first head apparatus.
[FIG. 9] FIG. 9 is a cross-sectional view that illustrates an optical path of the processing light and a flow path of purge gas in the first head apparatus.
[FIG. 10] FIG. 10 is a cross-sectional view that illustrates a configuration of a second head apparatus.
[FIG. 11] FIG. 11 is a diagram that illustrates an optical path of the processing light in the first head apparatus.
[FIG. 12] FIG. 12 is a diagram that illustrates a flow path of the purge gas in the second head apparatus
[FIG. 13] FIG. 13 is a transmission perspective view that illustrates an example of a cylindrical member in which a supply path of the purge gas is formed.
[FIG. 14] FIG. 14 is a cross-sectional view that illustrates an example of the cylindrical member in which the supply path of the purge gas is formed.
[FIG. 15] FIG. 15 is a cross-sectional view that illustrates a second head apparatus configured to emit a processing light for processing a three-dimensional structural object with a cylindrical shape, together with the three-dimensional structural object.
[FIG. 16] FIG. 16 is a transmission perspective view that illustrates a three-dimensional structural object in which a cylindrical gap is formed.
[FIG. 17] FIG. 17 is a cross-sectional view that illustrates the processing light applied to an inner wall surface of the three-dimensional structural object in which the cylindrical gap is formed.
[FIG. 18] FIG. 18 is a cross-sectional view that illustrates the processing light applied to the inner wall surface of the three-dimensional structural object in which the cylindrical gap is formed.
[FIG. 19] FIG. 19 is a cross-sectional view that illustrates a configuration in a modified example of the second head apparatus.
[FIG. 20] FIG. 20 is a cross-sectional view that illustrates the optical path of the processing light in the modified example of the second head apparatus.
[FIG. 21] FIG. 21 is a cross-sectional view that illustrates the optical path of the processing light in the modified example of the second head apparatus.
[FIG. 22] FIG. 22 is a cross-sectional view that illustrates a configuration in a modified example of the processing system.

### Description of Example embodiments

Next, with reference to drawings, a processing system SYS that is an example embodiment of a processing system in the present invention will be described. The processing system SYS in the example embodiment is a processing system that is configured to form a three-dimensional structural object ST, which is a specific example of a "build object", by performing an additive processing. For example, the processing system SYS is configured to form the three-dimensional structural object ST by performing the additive processing based on an LMD (Laser Metal Deposition). Note that the Laser Metal Deposition (LMD) may be referred to as a Direct Metal Deposition, a Direct Energy Deposition, a Laser Cladding, a Laser Engineered Net Shaping, a Direct Light Processing, a Laser Consolidation, a Shape Deposition Manufacturing, a Wire Feed Laser Deposition, a Gas Through Wire, a Laser Powder Fusion, a Laser Metal Forming, a Selective Laser Powder Re-melting, a Laser Direct Casting, a Laser Powder Deposition, a Laser Additive Manufacturing or a Laser Rapid Forming.

In the described description below, a positional relationship of various components that constitute the processing system SYS will be described by using an XYZ rectangular coordinate system that is defined by an X-axis, a Y-axis and a Z-axis perpendicular to one another. Note that each of an X-axis direction and a Y-axis direction is assumed to be a horizontal direction (i.e., a predetermined direction in a horizontal plane), and a Z-axis direction is assumed to be a vertical direction (i.e., a direction perpendicular to the horizontal plane, and substantially an up-down direction or a gravity direction) in the below-described description, for convenience of the description. Furthermore, rotational directions (in other words, inclination directions) around the X-axis, the Y-axis, and the Z-axis are referred to as a θX direction, a θY direction, and a θZ direction, respectively. Here, the Z-axis direction may be a gravity direction. Moreover, an XY plane may be a horizontal direction.

### (1) Configuration of Processing system SYS

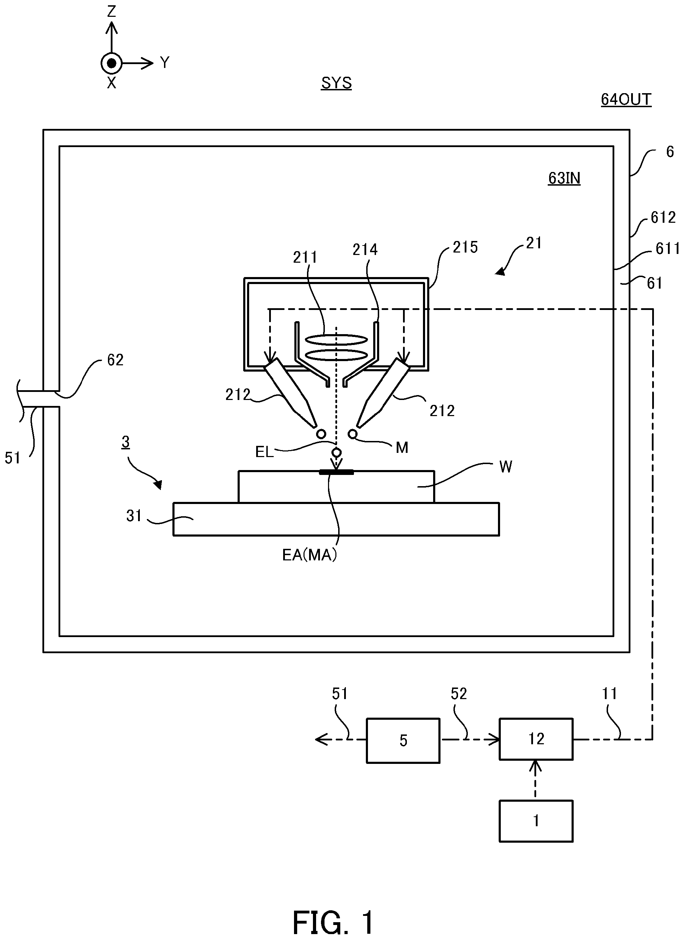

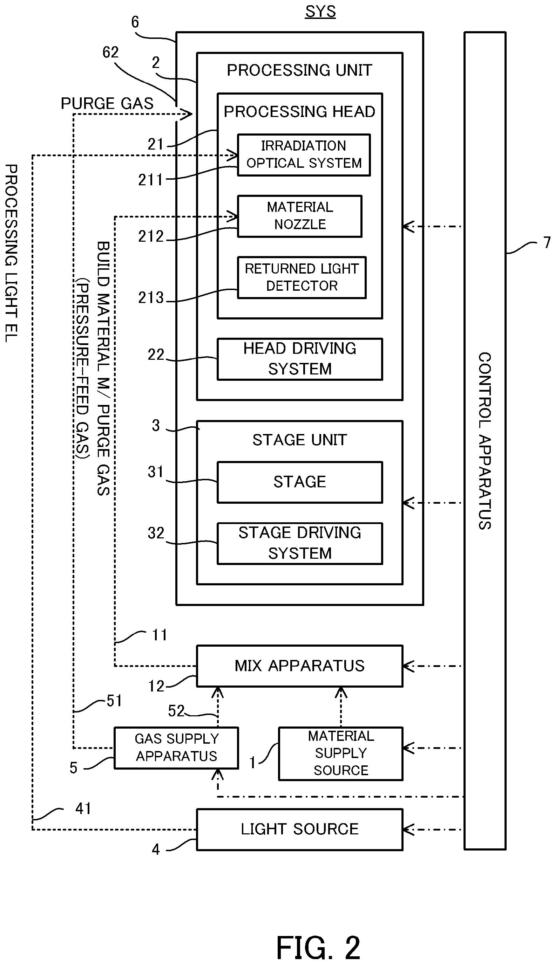

Firstly, with reference to FIG. 1 and FIG. 2, a configuration of the processing system SYS in the example embodiment will be described. FIG. 1 is a cross-sectional view that illustrates an example of the configuration of the processing-system SYS in the example embodiment. FIG. 2 is a system configuration diagram that illustrates an example of a system configuration of the processing system SYS in the example embodiment.

The processing system SYS is configured to perform a build operation for forming a three-dimensional structural object ST (i.e., a three-dimensional object having a size in each direction of three-dimensional directions, a solid object, in other words, an object having a size in the X-axis direction, the Y-axis direction, and the Z-axis direction). The processing system SYS is configured to form the three-dimensional structural object ST on the workpiece W that is a base (i.e., a base material) for forming the three-dimensional structural object ST. The processing system SYS is configured to form the three-dimensional structural object ST by performing the additive processing on the workpiece W. When the workpiece W is a below-described stage 31, the processing system SYS is configured to form the three-dimensional structural object ST on the stage 31. When the workpiece W is an existing structural object placed on the stage 31 (or placed on the stage 31), the processing system SYS may be configured to form the three-dimensional structural object ST on the existing structural object. In this case, the processing system SYS may form the three-dimensional structural object ST that is integrated with the existing structural object. An operation for forming the three-dimensional structural object ST that is integrated with the existing structural object is considered to be equivalent to an operation for adding a new structural object to the existing structural object. Note that the existing structural object may be an item that needs to be repaired having a missing part, for example. The processing system SYS may form the three-dimensional structural object ST on the item that needs to be repaired to fill in the missing part of the item that needs to be repaired. Alternatively, the processing system SYS may form the three-dimensional structural object ST that is separable from the existing structural object. FIG. 1 illustrates an example in which the workpiece W is the existing structural object held by the stage 31. Furthermore, the following will be described with reference to the example in which the workpiece W is the existing structural object held by the stage 31.

As described above, the processing system SYS is configured to form the three-dimensional structural object ST by the Laser Metal Deposition. That is, it can be said that the processing system SYS is a 3D printer that forms an object by using an Additive layer manufacturing technique. Note that the Additive layer manufacturing technique may be referred to as a Rapid Prototyping, a Rapid Manufacturing, or an Additive Manufacturing.

The processing system SYS forms the three-dimensional structural object ST by processing build materials M with a processing light EL. The build materials M are materials that are molten by an irradiation with the processing light EL having a predetermined intensity or more intensity. At least one of a metal material and a resin material is usable as the build materials M, for example. However, another material that is different from the metal material and the resin material may be used as the build materials M. The build materials M are powder-like or grain-like materials. That is, the build materials M are powdery materials. However, the build materials M may not be the powdery materials. For example, at least one of a wired-like build material and a gas-like build material may be used as the build materials M.

In the example embodiment, the processing system SYS is further configured to perform a processing operation for processing the three-dimensional structural object ST formed by the build operation (i.e., by the additive processing) in addition to or instead of the build operation for forming the three-dimensional structural object ST. For example, the processing system SYS may process the three-dimensional structural object ST by irradiating the three-dimensional structural object ST formed by the build operation, with the processing light EL used to perform the build operation.

In order to perform at least one of the build operation for forming the three-dimensional structural object ST and the processing operation for processing the three-dimensional structural object ST, the processing system SYS includes a material supply source 1, a processing unit 2, a stage unit 3, a light source 4, a gas supply apparatus 5, a housing 6, and a control apparatus 7, as illustrated in FIG. 1 and FIG. 2. At least a part of each of the processing unit 2 and the stage unit 3 is contained in a chamber space 63IN in the housing 6.

The material supply source 1 is configured to supply the build materials M to the processing unit 2. The material supply source 1 supplies, to the processing unit 2, the build materials M the amount of which is necessary for forming the three-dimensional structural object ST per unit time by supplying the build materials M the amount of which is based on the necessary amount.

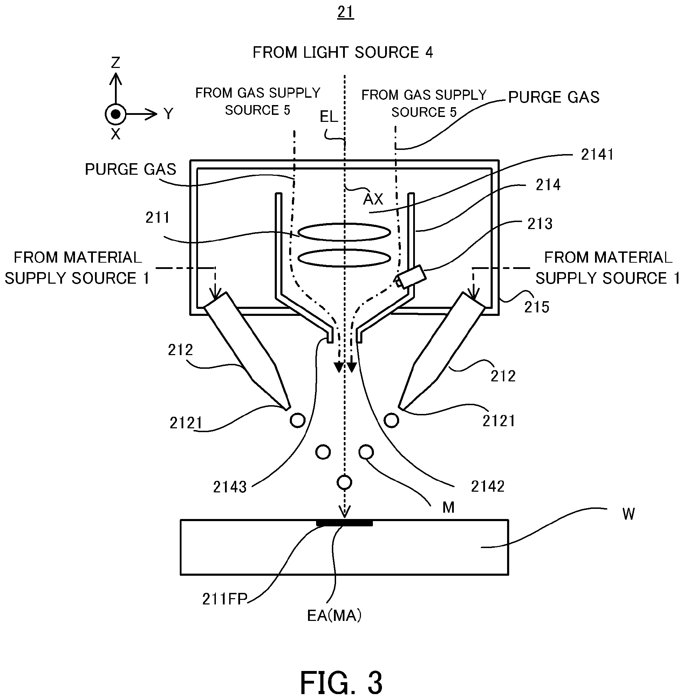

The processing unit 2 is configured to form the three-dimensional structural object ST by processing the build materials M supplied from the material supply source 1. In order to form the three-dimensional structural object ST, the processing unit 2 includes a processing head 21 and a head driving system 22. Furthermore, the processing head 21 includes an irradiation optical system 211, a material nozzle 212 (i.e., a supply system that supplies the build materials M), a returned light detector 213, a lens barrel 214, and a head housing 215. In the following description of the processing head 21, in addition to FIG. 1 and FIG. 2, reference is made to FIG. 3 that is a cross-sectional view that illustrates a configuration of the processing head 21, as appropriate. The processing head 21 and the head driving system 22 are contained in the chamber space 63IN. However, at least a part of the processing head 21 and/or the head driving system 22 may be disposed in an external space 64OUT that is a space outside the housing 6. Note that the external space 64OUT may be a space into which an operator of the processing system SYS is allowed to enter.

The irradiation optical system 211 is an optical system for emitting the processing light EL. Specifically, the irradiation optical system 211 is optically connected to the light source 4 for emitting the processing light EL, through a light transmitting member 41 that includes at least one of an optical fiber, a light pipe, and the like. The irradiation optical system 211 emits the processing light EL propagating from the light source 4 through the light transmitting member 41. The irradiation optical system 211 emits the processing light EL in a downward direction (i.e., toward -Z side) from the irradiation optical system 211. Therefore, an optical axis AX of the irradiation optical system 211 may be an axis along the Z-axis. The stage 31 is disposed below the irradiation optical system 211. When the workpiece W is placed on the stage 31, the irradiation optical system 211 emits the processing light EL toward the workpiece W that is an object. Specifically, the irradiation optical system 211 is configured to irradiate, with the processing light EL, a target irradiation area EA that is set on the workpiece W or in the vicinity of the workpiece W as an area that is irradiated with the processing light EL (typically, on which the light is condensed). That is, the irradiation optical system 211 irradiates a position in which the target irradiation area EA is set, with the processing light EL. Furthermore, a state of the irradiation optical system 211 may be switched between a state of irradiating the target irradiation area EA with the processing light EL and a state of not irradiating the target irradiation area EA with the processing light EL, under the control of the control apparatus 7. Note that a direction of the processing light EL emitted from the irradiation optical system 211 is not limited to directly below (i.e., that is coincident with a -Z-axis direction), and may be a direction inclined by a predetermined angle with respect to the Z-axis, for example.

The irradiation optical system 211 may condense the processing light EL emitted toward the workpiece W, on a condensed plane 211FP that intersects with the optical axis AX. Therefore, the irradiation optical system 211 may be referred to as a condensing optical system. The condensed plane 211FP is typically set on the workpiece W or in the vicinity of the workpiece W. Therefore, the target irradiation area EA set on the workpiece W or in the vicinity of the workpiece W described above may be set on the condensed plane 211FP. That is, the target irradiation area EA and the condensed plane 211FP may be at least partially overlapped. In this case, it may be considered that the irradiation optical system 211 irradiates a position in which the condensed plane 211FP is set, with the processing light EL. Note that such a condensed plane 211FP is typically set at a rear focal position of the irradiation optical system 211.

The irradiation optical system 211 is contained in an internal space 2141 of the lens barrel 214. That is, the lens barrel 214 includes the irradiation optical system 211 in the internal space 2141. Therefore, the lens barrel 214 may be referred to as a housing member. The lens barrel 214 may hold the irradiation optical system 211 that is contained in the internal space 2141. In the lens barrel 214, there is formed an emitting port 2142 that is an aperture from which the processing light EL emitted from the irradiation optical system 211 may be emitted. Therefore, the irradiation optical system 211 emits the processing light EL toward the outside of the lens barrel 214 from the inside of the lens barrel 214, through the emitting port 2142.

The lens barrel 214 is further contained in the head housing 215. In this case, it may be considered that the irradiation optical system 211 is contained in the head housing 215. Therefore, the head housing 215 may also be referred to as a housing member. The lens barrel 214 is disposed such that at least the emitting port 2142 is exposed to the outside of the head housing 215. Consequently, even if the lens barrel 214 is contained in the head housing 215, the irradiation optical system 211 may emit the processing light EL toward the outside of the lens barrel 214 through the emitting port 2142 (further, toward the outside of the head housing 215). Note that the head housing 215 and the lens barrel 214 may be integrated. Alternatively, the processing head 21 may not include the head housing 215. In this case, the lens barrel 214 may be used as the head housing 215.

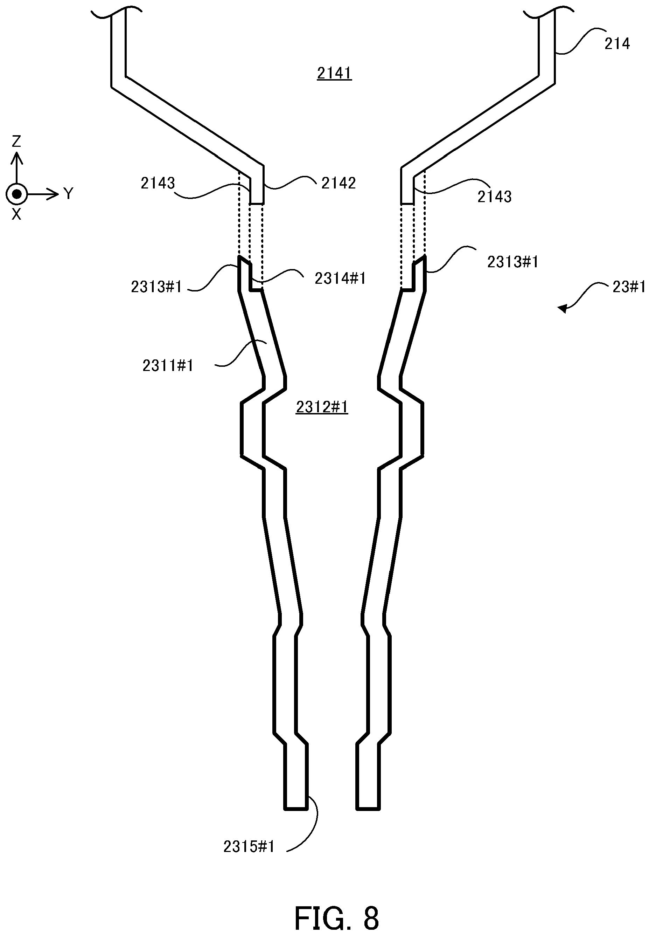

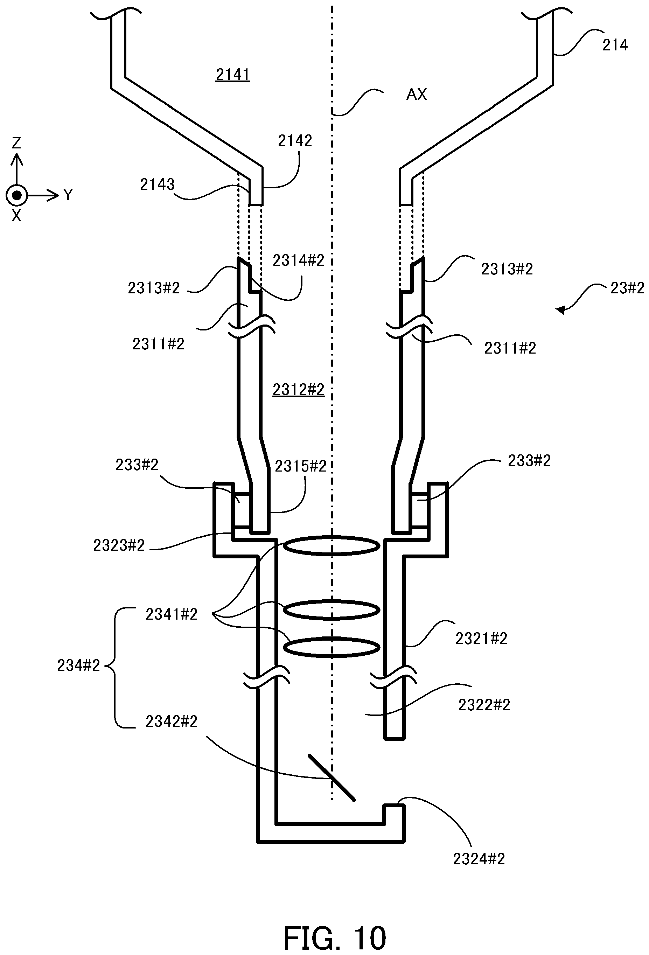

The lens barrel 214 may be attachable to and removable from a head apparatus 23 described later in detail (e.g., see FIG. 8 and FIG. 10, etc.). That is, an external head apparatus 23 may be attachable to the lens barrel 214, and the head apparatus 23 attachable to the lens barrel 214 may be detachable from the lens barrel 214. Since the lens barrel 214 constitutes the processing system SYS, it may be considered that the head apparatus 23 is attachable to and detachable from the processing system SYS. The head apparatus 23, however, may be fixed to the lens barrel 214. That is, the head apparatus 23 may not be detachable from the lens barrel 214.

In the lens barrel 214, there is formed an attachment part 2143 that is usable to attach the head apparatus 23 to the lens barrel 214. The attachment part 2143 may include, for example, a member into which at least a part of the head apparatus 23 is inserted. As an example, as illustrated in FIG. 3, the attachment part 2143 may include a protruding member that protrudes from the periphery (that protrudes downward in the example illustrated in FIG. 3). In the example illustrated in FIG. 3, the protruding member is formed to surround the emitting port 2142. Alternatively, the attachment part 2143 may include a member that is configured to apply a force for attaching the head apparatus 23 to the lens barrel 214, to the head apparatus 23. For example, the attachment part 2143 may include at least one of a vacuum chuck that is capable of sucking the head apparatus 23 by using a negative pressure and an electrostatic chuck that is capable of sucking the head apparatus 23 by using an electrostatic force. Alternatively, in addition to or instead of the lens barrel 214, the head housing 215 may include the attachment part 2143 for attaching the head apparatus 23 that is mountable on and removable from the head housing 215. In the following, for convenience of explanation, a description will be given to an example in which the lens barrel 214 includes the attachment part 2143 into which at least a part of the head apparatus 23 is fitted (i.e., the example illustrated in FIG. 3).

The head housing 215 further includes the material nozzle 212 attached thereto. In the example illustrated in FIG. 1 and FIG. 3, two material nozzles 212 are attachable to the head housing 215. However, one material nozzle 212 may be attachable to the head housing 215, or three or more material nozzles 212 may be attachable to the head housing 215. As described above, when the processing head 21 does not include the head housing 215, the material nozzle 212 may be attachable to the lens barrel 214 (or any other support member).

In the material nozzle 212, there is formed a material supply port 2121 that is an aperture. The material nozzle 212 is configured to supply (e.g., inject, jet, blow out, or spray) the build materials M from the material supply port 2121. The material nozzle 212 is physically connected to the material supply source 1 that is the supply source of the build materials M, through a supply pipe 11 and a mix apparatus 12. The material nozzle 212 supplies the build materials M supplied from the material supply source 1 through the supply pipe 11 and the mix apparatus 12. The material nozzle 212 may pressure-feed the build materials M supplied from the material supply source 1 through the supply pipe 11. That is, the build materials M from the material supply source 1 and a gas for feeding (that is, a pressure-feed gas, for example, an inert gas containing at least one of nitrogen and argon or the like) may be mixed by the mix apparatus 12 and then pressure-fed to the material nozzle 212 through the supply pipe 11. As a result, the material nozzle 212 supplies the build materials M together with the gas for feeding. A purge gas supplied from the gas supply apparatus 5 is used as the gas for feeding, for example. However, a gas supplied from a gas supply apparatus that is different from the gas supply apparatus 5 may be used as the gas for feeding. Although the material nozzle 212 is illustrated to have a tube-like shape in FIG. 1 and FIG. 3, a shape of the material nozzle 212 is not limited to this shape. The material nozzle 212 supplies the build materials M in a downward direction (i.e., toward -Z side) from the material nozzle 212. The stage 31 is disposed below the material nozzle 212. When the workpiece W is placed on the stage 31, the material nozzle 212 supplies the build materials M toward the workpiece W or the vicinity of the workpiece W. A moving direction of the build materials M supplied from the material nozzle 212 is a direction inclined by a predetermined angle (an acute angle as an example) with respect to the Z-axis direction, but it may be the -Z side (i.e., directly below). Furthermore, when the plurality of material nozzles 212 are attachable to the head housing 214, a distance between the condensed plane 211FP and each of a plurality of material supply ports 2121 may be the same in a direction along the optical axis AX of the irradiation optical system 211.

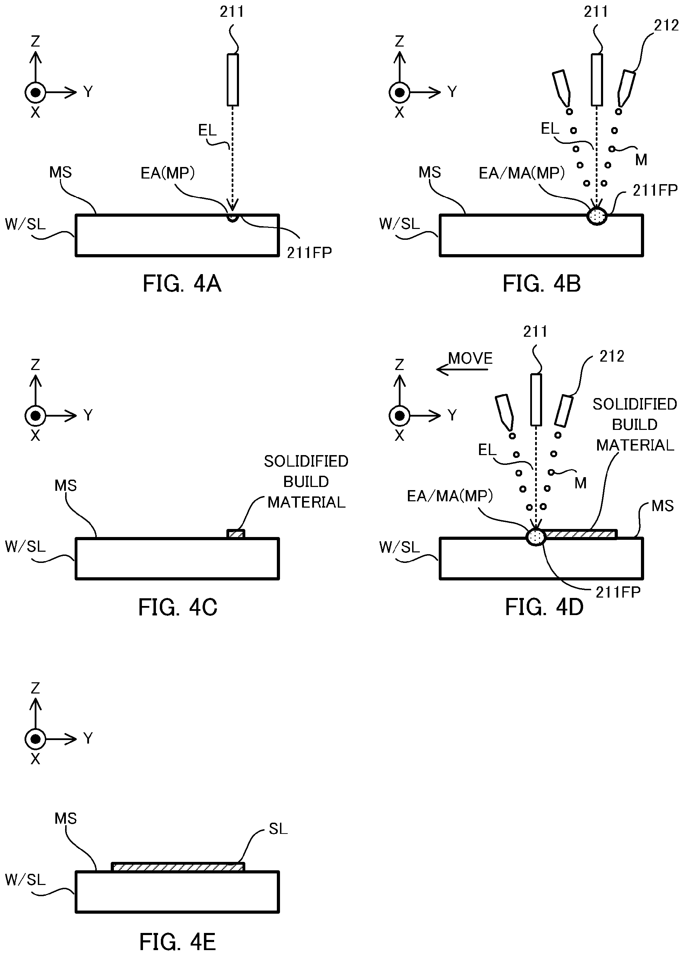

In the example embodiment, the material nozzle 212 is aligned to the irradiation optical system 211 so as to supply the build materials M toward a position that is irradiated with the processing light EL by the irradiation optical system 211 (i.e., the target irradiation area EA). That is, the material nozzle 212 is aligned to the irradiation optical system 211 such that the target irradiation area EA is coincident with (or at least partially overlaps with) a target supply area MA that is set on the workpiece W or in the vicinity of the workpiece W as an area into which the material nozzle 212 supplies the build materials M. The material nozzle 212 may be aligned to the irradiation optical system 211 such that the material nozzle 212 supplies the build materials M to a below-described melt pool MP that is formed by the processing light EL emitted from the irradiation optical system 211 (see FIG. 4). The material nozzle 212 may not supply the material to the melt pool MP. For example, the processing system SYS may melt the build materials M by the irradiation optical system 211 before the build materials M from the material nozzle 212 reach the workpiece W, and may allow the molten build materials M to adhere to the workpiece W.

The returned light detector 213 is configured to detect a returned light from the workpiece W that is irradiated with the processing light EL. The returned light may include a reflected light of the processing light EL from the workpiece W. The returned light may include a scattered light of the processing light EL from the workpiece W. The returned light may include a transmitted light of the processing light EL from the workpiece W. A detection result of the processing light EL by the returned light detector 213 is outputted to the control apparatus 7 from the returned light detector 213. The application of the detection result of the processing light EL by the returned light detector 213 will be described in detail later. The processing head 21 may not include the returned light detector 213.

The head driving system 22 is configured to move the processing head 21. The head driving system 22 moves the processing head 21 along at least one of the X-axis, the Y-axis, the Z-axis, the θX direction, the θY direction and the θZ direction for example. When the head driving system 22 moves the processing head 21, a relative position changes between the processing head 21 and the stage 31. Furthermore, when the workpiece W is placed on the stage 31, a relative position changes between the processing head 21 and the workpiece W. In addition, when the three-dimensional structural object ST is formed on the workpiece W placed on the stage 31, a relative position changes between the processing head 21 and the three-dimensional structural object ST. Therefore, the head driving system 22 may serve as a position change apparatus for changing a relative positional relationship between the processing head 21 and each of the stage 31, the workpiece W and the three-dimensional structural object ST. Furthermore, since the processing head 21 includes the irradiation optical system 211, the irradiation optical system 211 moves due to the movement of the processing head 21. Therefore, the head driving system 22 may serve as a position change apparatus for changing a relative positional relationship between the irradiation optical system 211 and each of the stage 31, the workpiece W and the three-dimensional structural object ST. Furthermore, as described above, when the head apparatus 23 is attachable to the lens barrel 214 of the processing head 21, the head apparatus 23 moves due to the movement of the processing head 21. Therefore, the head driving system 22 may serve as a position change apparatus for changing a relative positional relationship between the head apparatus 23 and each of the stages 31, the workpiece W, and the three-dimensional structural object ST.

The stage unit 3 includes the stage 31. The stage 31 is contained in the chamber space 63IN. The workpiece W may be placed on the stage 31. The stage 31 may be configured to hold the workpiece W placed on the stage 31. In this case, the stage 31 may include at least one of a mechanical chuck, an electrostatic chuck, a vacuum suction chuck and the like in order to hold the workpiece W. Alternatively, the stage 31 may not be configured to hold the workpiece W placed on the stage 31. In this case, the workpiece W may be placed on the stage 31 without a clamp. Since the stage 31 is contained in the chamber space 63IN, the workpiece W supported by the stage 31 is also contained in the chamber space 63IN. Furthermore, the stage 31 may be configured to release the held workpiece W, when the workpiece W is held. The irradiation optical system 211 described above irradiates the workpiece W with the processing light EL in at least a part of a period in which the workpiece W is placed on the stage 31. Furthermore, the material nozzle 212 described above supplies the build materials M in at least a part of the period in which the workpiece W is placed on the stage 31.

A stage driving system 32 is configured to move the stage 31. The stage driving system 32 moves the stage 31 along at least one of the X-axis, the Y-axis, the Z-axis, the θX direction, the θY direction and the θZ direction for example. When the stage driving system 32 moves the stage 31, the relative position changes between the processing head 21 and the stage 31. Therefore, the stage driving system 32 may serve as the position change apparatus for changing the relative positional relationship between the processing head 21 and each of the stage 31, the workpiece W, and the three-dimensional structural object ST, as in the head driving system 22 described above. The stage driving system 32 may serve as the position change apparatus for changing the relative positional relationship between the head apparatus 23 and each of the stage 31, the workpiece W, and the three-dimensional structural object ST, as in the head driving system 22 described above.

The light source 4 is configured to emit at least one of an infrared light, a visible light, and an ultraviolet light, as the processing light EL, for example. However, another type of light may be used as the processing light EL. The processing light EL may include a plurality of pulsed lights (i.e., a plurality of pulsed beams). The processing light EL may include a continuous wave (CW). The processing light EL may be a laser beam. In this case, the light source 4 may include a semiconductor laser such as a laser light source (e.g., a laser diode (LD). The laser light source may include at least one of a fiber laser, a CO2 laser, a YAG laser, an Excimer laser and the like. The processing light EL may not be the laser light. The light source 4 may include any light source (e.g., at least one of a LED (Light Emitting Diode), a discharge lamp and the like).

The gas supply apparatus 5 is a supply source of the purge gas for purging the chamber space 63IN. The purge gas includes an inert gas. An example of the inert gas is at least one of a Nitrogen gas and an Argon gas. The gas supply apparatus 5 is connected to the chamber space 63IN through a supply port 62 formed at a wall member 61 of the housing 6 and a supply pipe 51 that connects the gas supply apparatus 5 and the supply port 62. The gas supply apparatus 5 supplies the purge gas to the chamber space 63IN through the supply pipe 51 and the supply port 62. As a result, the chamber space 63IN is a space that is purged by the purge gas. The purge gas supplied to the chamber space 63IN may flow out from a not-illustrated discharge port formed at the wall member 61. Note that the gas supply apparatus 5 may be a tank that stores the inert gas. When the inert gas is the Nitrogen gas, the gas supply apparatus 5 may be a Nitrogen gas generation apparatus that generates the Nitrogen gas by using the air as a material.

The purge gas from the gas supply apparatus 5 may be supplied to the internal space 2141 of the lens barrel 214, as illustrated in FIG. 3. Since the irradiation optical system 211 is contained in the internal space 2141, the gas supply apparatus 5 may supply the purge gas to the irradiation optical system 211. The purge gas supplied to the irradiation optical system 211 may be used to cool the irradiation optical system 211. The purge gas supplied to the irradiation optical system 211 may be also used to prevent an unnecessary substance from adhering to the irradiation optical system 211. The unnecessary substance may include fumes generated by the irradiation of the workpiece W with the processing light EL, for example. The unnecessary substance may include at least a part of the build materials M supplied from the material nozzle 212 (especially, the build materials M that are not used to form the three-dimensional structural object ST), for example. The purge gas supplied to the irradiation optical system 211 may flow out toward the outside of the lens barrel 214 from the inside of the lens barrel 214 through the emitting port 2142 of the lens barrel 214, as illustrated in FIG. 3.

As described above, when the material nozzle 212 supplies the build materials M with the purge gas, the gas supply apparatus 5 may supply the purge gas to the mixed apparatus 12 to which the build materials M from the material supply source 1 are supplied in addition to the chamber space 63IN. Specifically, the gas supply apparatus 5 may be connected to the mix apparatus 12 through a supply pipe 52 that connects the gas supply apparatus 5 and the mix apparatus 12. As a result, the gas supply apparatus 5 supplies the purge gas to the mix apparatus 12 through the supply pipe 52. In this case, the build materials M from the material supply source 1 may be supplied (specifically, pressure-fed) to the material nozzle 212 through the supply pipe 11, by the purge gas supplied from the gas supply apparatus 5 through the supply pipe 52. That is, the gas supply apparatus 5 may be connected to the material nozzle 212 through the supply pipe 52, the mix apparatus 12 and the supply pipe 11. In that case, the material nozzle 212 supplies, from the material supply port 2121, the build materials M with the purge gas for pressure-feeding the build materials M.

The housing 6 is a housing apparatus that is configured to contain at least a part of each of at least the processing unit 2 and the stage unit 3 in the chamber space 63IN that is an internal space of the housing 6. The housing 6 includes the wall member 61 that defines the chamber space 63IN. The wall member 61 is a member that separates the chamber space 63IN from the external space 64OUT at the outside of the housing 6. The wall member 61 faces the chamber space 63IN through its inner wall surface 611, and faces the external space 64OUT through its outer wall surface 612. In this case, a space surrounded by the wall member 61 (more specifically, a space surrounded by the inner wall surface 611 of the wall member 61) is the chamber space 63IN. Note that an openable and closable door may be disposed at the wall member 61. The door may be opened when the workpiece W is to be placed on the stage 31. The door may be opened when the workpiece W and/or the three-dimensional structural object ST is unloaded from the stages 31. The door may be closed in a period in which each of the build operation and the processing operation is performed. Note that a not-illustrated observation window for visually observing the chamber space 63IN from the external space 64OUT of the housing 6 may be formed at the wall member 61.

The control apparatus 7 is configured to control an operation of the processing-system SYS. The control apparatus 7 may include, for example, an arithmetic apparatus and a storage apparatus. The arithmetic apparatus may include at least one of a CPU (Central Processing Unit) and a GPU (Graphics Processing Unit), for example. The storage apparatus may include a memory, for example. The control apparatus 7 serves as an apparatus that controls the operation of the processing-system SYS by means of the arithmetic apparatus executing a computer program. The computer program is a computer program that allows the arithmetic apparatus to execute (i.e., to perform) a below-described operation that should be executed by the control apparatus 7. That is, the computer program is a computer program that allows the control apparatus 7 to serve to make the processing system SYS execute the below-described operation. The computer program executed by the arithmetic apparatus may be recorded in the storage apparatus (i.e., a recording medium) of the control apparatus 7, or may be recorded in any recording medium (e.g., a hard disk or a semiconductor memory) that is built in the control apparatus 7 or that is externally attachable to the control apparatus 7. Alternatively, the arithmetic apparatus may download the computer program that should be executed, from an apparatus disposed at the outside of the control apparatus 7 through a network interface.

For example, control apparatus 7 may control an emitting aspect of the processing light EL by the irradiated optical system 211. The emitting aspect may include at least one of intensity of the processing light EL and emitting timing of the processing light EL, for example. When the processing light EL includes a plurality of pulsed lights, the emitting aspect may include at least one of a light emitting time of the pulsed light, a light emitting period of the pulsed light, and a ratio (a so-called duty ratio) between a length of the light emitting time of the pulsed light and the light emitting period of the pulsed light. In addition, the control apparatus 7 may control a moving aspect of the processing head 21 by the head driving system 22. The control apparatus 7 may control a moving aspect of the stage 31 the by stage driving system 32. The moving aspect may include at least one of a moving distance, a moving speed, a moving direction, and a moving timing, for example. Furthermore, the control apparatus 7 may control a supply aspect of the build materials M by the material nozzle 212. The supply aspect may include at least one of a supplied amount (especially, a supplied amount per unit time) and a supply timing (a supply time), for example.

The control apparatus 7 may not be disposed in the processing system SYS. For example, the control apparatus 7 may be disposed at the outside of the processing system SYS as a server or the like. In this case, the control apparatus 7 may be connected to the processing system SYS through a wired and/or wireless network (or a data bus and/or a communication line). A network using a serial-bus-type interface represented, for example, by at least one of IEEE1394, RS-232x, RS-422, RS-423, RS-485 and USB may be used as the wired network. A network using a parallel-bus-type interface may be used as the wired network. A network using an interface that is compatible to Ethernet represented, for example, by at least one of 10BASE-T, 100BASE-TX and 1000BASE-T may be used as the wired network. A network using an electrical wave may be used as the wireless network. An example of the network using the electrical wave is a network that is compatible to IEEE802.1x (e.g., at least one of a wireless LAN and Bluetooth (registered trademark)). A network using an infrared ray may be used as the wireless network. A network using an optical communication may be used as the wireless network. In this case, the control apparatus 7 and the processing system SYS may be configured to transmit and receive various information through the network. Furthermore, the control apparatus 7 may be configured to transmit information such as a command and a control parameter, to the processing system SYS through the network. The processing system SYS may include a reception apparatus that is configured to receive the information such as the command and the control parameter from the control apparatus 7, through the network. The processing system SYS may include a transmission apparatus that is configured to transmit the information such as the command and the control parameter, to the control apparatus 7 through the network (i.e., an output apparatus that is configure to output the information to the control apparatus 7). Alternatively, a first control apparatus that is configured to perform a part of the processing performed by the control apparatus 7 may be disposed in the processing system SYS, whereas a second control apparatus that is configured to perform another part of the processing performed by the control apparatus 7 may be disposed at the outside of the processing system SYS.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control apparatus 7. The recording medium may include a device that is configured to record the computer program (e.g., a device for a universal use or a device for an exclusive use in which the computer program is embedded to be executable in a form of at least one of a software, a firmware, and the like). Furthermore, various processes or functions included in the computer program may be realized by a logical processing block that is realized in the control apparatus 7 by means of the control apparatus 7 (i.e., a computer) executing the computer program, or may be realized by a hardware such as a predetermined gate array (an FPGA, an ASIC) of the control apparatus 7, or may be realized in a form in which the logical processing block and a partial hardware module that realizes a part of elements of the hardware are combined.

### (2) Operation of Processing System SYS

Next, the operation of the processing-system SYS will be described. As described above, the processing system SYS performs the build operation for forming the three-dimensional structural object ST by performing the additive processing on the workpiece W. Furthermore, the processing system SYS performs the processing operation for processing the three-dimensional structural object ST formed by a forming operation. Thus, in the below-described description, the build operation and the processing operation will be described in order.

### (2-1) Build Operation

Firstly, the build operation will be described. As described above, the processing system SYS forms the three-dimensional structural object ST by the Laser Metal Deposition. Thus, the processing system SYS may form the three-dimensional structural object ST by performing an existing build operation based on the Laser Metal Deposition. Hereinafter, an example of the build operation of forming the three-dimensional structural object ST by using the Laser Metal Deposition will be briefly described.

The processing system SYS forms the three-dimensional structural object ST on the workpiece W, on the basis of three-dimensional model data or the like (e.g., CAD (Computer Aided Design) data) of the three-dimensional structural object ST that should be formed. Measurement data of the solid object measured by at least one of a not-illustrated measurement apparatus disposed in the processing system SYS and a three-dimensional shape measurement device disposed separately from the processing system SYS may be used as the three-dimensional model data. The processing system SYS sequentially forms a plurality of layered partial structural objects (hereinafter referred to as "structural layers") SL that are aligned along the Z-axis direction in order to form the three-dimensional structural object ST, for example. For example, the processing system SYS forms, one by one, the plurality of structural layers SL on the basis of data on the plurality of layers that are obtained by slicing a model of the three-dimensional structural object ST along the Z-axis direction. Consequently, the three-dimensional structural object ST is formed, wherein the three-dimensional structural object ST is a layered structural body in which the plurality of structural layers SL are layered. Hereinafter, a flow of an operation for forming the three-dimensional structural object ST by forming the plurality of structural layers SL one by one in sequence will be described.

Firstly, an operation for forming each structural layer SL will be described with reference to FIG. 4A to FIG. 4E. The processing system SYS moves at least one of the processing head 21 and the stages 31 such that the target irradiation area EA is set in a desired area on a build surface MS that corresponds to a surface of the workpiece W or a surface of the formed structural layer SL, under the control of the control apparatus 7. Then, the processing system SYS irradiates the target irradiation area EA with the processing light EL from the irradiation optical system 211. At this time, the condensed plane 211FP on which the processing light EL is condensed may be located on the build surface MS in the Z-axis direction. Alternatively, the condensed plane 211FP may be away from the build surface MS in the Z-axis direction. Consequently, as illustrated in FIG. 4A, the melt pool (i.e., a pool of metal or the like molten by the processing light EL) MP is formed on the build surface MS that is irradiated with the processing light EL. Additionally, the processing system SYS supplies the build materials M from the material nozzle 212 under the control of the control apparatus 7. Here, since the target supply area MA to which the build materials M are supplied is coincident with the target irradiation area EA as described above, the target supply area MA includes at least a part of an area in which the melt pool MP is formed. Therefore, the processing system SYS supplies the build materials M from the material nozzle 212 to the melt pool MP, as illustrated in FIG. 4B. Consequently, the build compound M supplied to the melt pool MP is molten. Then, when the melt pool MP is not irradiated with the processing light EL due to the movement of at least one of the processing head 21 and the stage 31, the build materials M molten in the melt pool MP are cooled and solidified (i.e., coagulated). Consequently, as illustrated in FIG. 4C, the solidified build materials M are deposited on the build surface MS. That is, a build object is formed by a deposit of the solidified build materials M.

The processing system SYS repeats a series of build process including: the formation of the melt pool MP by the irradiating with the processing light EL; the supply of the build materials M to the melt pool MP; the melting of the supplied build materials M; and the solidification of the molten build materials M, while relatively moving the processing head 21 relative to the build surface MS along the XY plane, as illustrated in FIG. 4D. At this time, the processing system SYS irradiates an area on the build surface MS on which the build object should be formed with the processing light EL, and does not irradiate an area on the build surface MS on which the build object should not be formed with the processing light EL. That is, the processing system SYS moves the target irradiation area EA along a predetermined moving trajectory on the build surface MS and irradiates the build surface MS with the processing light EL at a timing based on an aspect of a distribution of the area on which the build object should be formed. Consequently, the melt pool MP also moves on the build surface MS along a moving trajectory based on the moving trajectory of the target irradiation area EA. Specifically, the melt pool MP is formed in series at a part that is irradiated with the processing light in the area along the moving trajectory of the target irradiation area EA on the build surface MS. Consequently, as illustrated in FIG. 4E, the structural layer SL that is an aggregation of the build object of the build materials M, which are solidified after being molten, is formed on the build surface MS. That is, the structural layer SL that is an aggregation of the build object formed in a pattern based on the moving trajectory of the melt pool MP on the build surface MS (i.e., the structural layer SL having a shape based on the moving trajectory of the melt pool MP in a planer view) is formed. Incidentally, when the target irradiation area EA is set at the area on which the build object should not be formed, the processing system SYS may irradiate the target irradiation area EA with the processing light EL and may stop the supply of the build materials M. Furthermore, when the target irradiation area EA is set at the area on which the build object should not be formed, the processing system SYS may supply the build materials M to the target irradiation area EA and may irradiate the target irradiation area EA with the processing light EL having an intensity by which the melt pool MP is not formed.

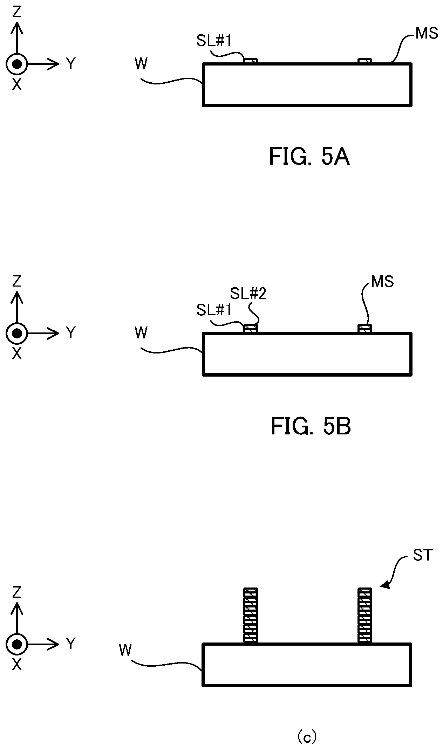

The processing system SYS repeats the operation for forming the structural layer SL on the basis of the three-dimensional model data, under the control of the control apparatus 7. Specifically, the control apparatus 7 firstly generates slice data by performing a slicing process on the three-dimensional model data by a layer pitch. Note that data obtained by modifying a part of the slice data based on a characteristic of the processing system SYS may be used. The processing system SYS performs a process for forming a first structural layer SL#1 on the build surface MS that corresponds to a surface WS of the workpiece W on the basis of the three-dimensional model data corresponding to the structural layer SL#1 (i.e., the slice data corresponding to the structural layer SL#1). Consequently, as illustrated in FIG. 5A, the structural layers SL#1 is formed on the build surface MS. Then, the processing system SYS sets a surface (i.e., an upper surface) of the structural layer SL#1 to be a new build surface MS and forms a second structural layer SL#2 on the new build surface MS. In order to form the structural layers SL#2, the control apparatus 7 firstly controls at least one of the head driving system 22 and the stage driving system 32 such that the processing head 21 moves along the Z-axis relative to the stage 31. Specifically, the control apparatus 7 controls at least one of the head driving system 22 and the stage driving system 32 to move the processing head 21 toward the +Z side and/or to move the stage 31 toward-Z side, so that the target irradiation area EA and the target supply area MA (and, if necessary, the condensed plane 211FP) are set on the surface of the structural layer SL#1 (i.e., the new build surface MS). Then, the processing system SYS forms the structural layer SL#2 on the structural layer SL#1 on the basis of the slice data corresponding to the structural layer SL#2, in the same process as that for forming the structural layer SL#1, under the control of the control apparatus 7. Consequently, as illustrated in FIG. 5B, the structural layers SL#2 is formed. Then, the same process is repeated until all the structural layers SL that constitute the three-dimensional structural object ST that should be formed on the workpiece W are formed. Consequently, as illustrated in FIG. 5C, the three-dimensional structural object ST is formed by a layered structural object in which the plurality of structural layers SL are layered. Each of FIG. 5A to FIG. 5C illustrates an example in which a tube-like three-dimensional structural object ST is formed.

As described above, the processing system SYS is configured to form the three-dimensional structural object ST by irradiating the build materials M supplied by the material nozzle 212 with the processing light EL from the irradiation optical system 211. That is, the processing system SYS performs the additive processing for forming the three-dimensional structural object ST by using the material nozzle 212 and the irradiation optical system 211. Therefore, it may be considered that the material nozzle 212 and the irradiation optical system 211 serve as a processing apparatus that is configured to perform the additive processing for forming the three-dimensional structural object ST. It may be also considered that the material nozzle 212 and the irradiation optical system 211 serve as a build apparatus that is configured to perform the build operation for forming the three-dimensional structural object ST.

### (2-2) Processing Operation

Next, the processing operation for processing the three-dimensional structural object ST formed by the build operation described above will be described.

The processing system SYS may perform a processing operation for processing at least a part of a surface of the three-dimensional structural object ST by irradiating the at least a part of the surface of the three-dimensional structural object ST with the processing light EL. For example, the processing system SYS may perform a processing operation for removing at least a part of the surface of the three-dimensional structural object ST by irradiating the at least a part of the surface of the three-dimensional structural object ST with the processing light EL. In this case, the processing operation may be referred to as a removal processing operation. For example, the processing system SYS may perform a processing operation for forming a mark on at least a part of the surface of the three-dimensional structural object ST by irradiating the at least a part of the surface of the three-dimensional structural object ST with the processing light EL. In this case, the processing operation may be referred to as a marking operation. For example, the processing system SYS may perform a processing operation for melting at least a part of the surface of the three-dimensional structural object ST by irradiating the at least a part of the surface of the three-dimensional structural object ST with the processing light EL. In this case, the processing operation may be referred to as a melting operation (or re-melting operation). In the following, a detailed description will be given to the processing operation for melting at least a part of the surface of the three-dimensional structural object ST (i.e., the melting operation).

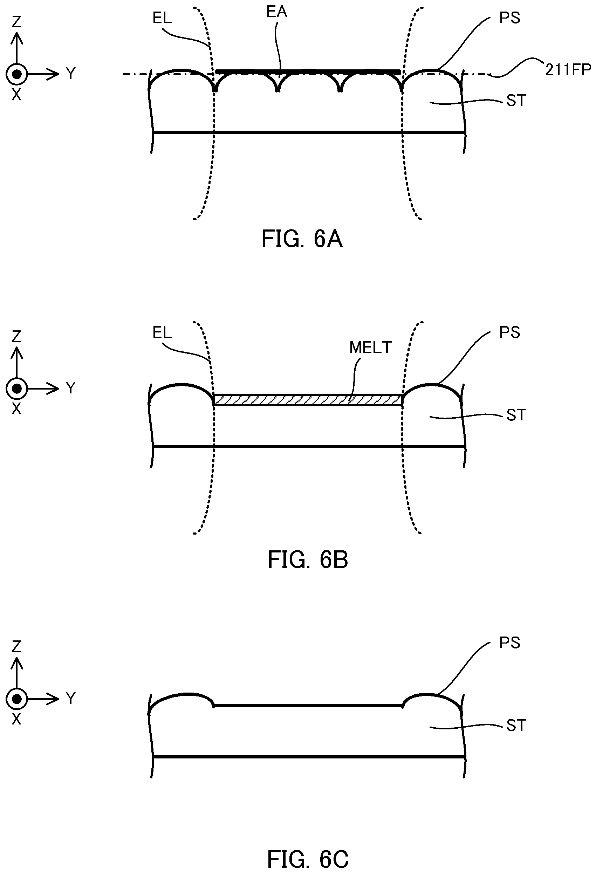

The processing system SYS may perform the melting operation to smooth a processing target surface PS (see FIG. 6 and the like that will be described later), which is at least a part of the surface of the three-dimensional structural object ST. In this case, the processing operation (i.e., the melting operation) may be referred to as a smoothing operation. In the example embodiment, the "smoothing operation for smoothing the processing target surface PS" may include an operation for smoothing the surface of the processing target surface PS, increasing the flatness of (i.e., flattening) the processing target surface PS, and/or reducing the surface roughness of (i.e., fining) the processing target surface PS, as compared with those before the smoothing operation.

Specifically, as described above, in the example embodiment, the three-dimensional structural object ST is formed by melting and then solidifying the powdery or granular build materials M. Therefore, the build materials M that are not molten may be adhere to at least a part of the surface of the three-dimensional structural object ST. Furthermore, the build materials M that are resolidified in an unintentional shape may adhere to at least a part of the surface of the three-dimensional structural object ST. In this case, the surface to which at least one of the build materials M that are not molten and the build materials M that are resolidified in an unintentional shape adhere, may be set as the processing target surface PS.

For example, as described above, in the example embodiment, at least one of the processing head 21 and the stage 31 moves along each of the X-axis and the Y-axis (i.e., along the XY plane) in a period in which each structural layer SL is formed. In this case, depending on the moving aspect of at least one of the processing head 21 and the stage 31, regular or irregular concavity and convexity corresponding to a movement pattern (typically, a pitch of movement) of at least one of the processing head 21 and the stage 31 may appear on at least a part of the surface of the structural layer SL along the XY plane (and thus, the surface of the three-dimensional structural layer ST). Furthermore, as described above, in the example embodiment, the three-dimensional structural object ST is formed by that the plurality of structural layers SL are layered. In this case, regular or irregular concavity and convexity corresponding to a pitch of the lamination of the plurality of structural layers SL may appear on the surface of the three-dimensional structural object ST (especially, a plane facing in a direction intersecting with a lamination direction of the structural layers SL, which is a plane along the lamination direction or an inclined plane). In this case, the surface on which the regular or irregular concavity and convexity appear, may be set as the processing target surface PS.

Here, with reference to FIG. 6A to FIG. 6C, a description will be given to a technical reason why the processing target surface PS is smoothed by performing the melting operation (the smoothing operation) for melting at least a part of the processing target surface PS. Each of FIG. 6A to FIG. 6C is a cross-sectional view that illustrates a state of the processing target surface PS in a process for performing the melting operation (the smoothing operation). In the description of FIG. 6A to FIG. 6C, the three-dimensional structural object ST is disposed in a posture that is different from a posture at the time of the building.

In order to perform the melting operation, the processing system SYS, sets the target irradiation area EA on the processing target surface PS, under the control of the control apparatus 7, as illustrated in FIG. 6A. At this time, the condensed plane 211FP on which the processing light EL is condensed may be coincident with the processing target surface PS. Alternatively, the condensed plane 211FP may be away from the processing target surface PS. Then, the processing system SYS irradiates the target irradiation area EA with the processing light EL from the irradiation optical system 211. On the other hand, the processing system SYS may not supply the build materials M from the material nozzle 212 to the processing target face PS. FIG. 6A illustrates an example in which the processing target surface PS is the surface on which regular or irregular concavity and convexity appear. When the target irradiation area EA is irradiated with the processing light EL, as illustrated in FIG. 6B, the solid-shape build materials M on the processing target surface PS are molten by the processing light EL. When the build materials M that are solidified to form concavity and convexity are molten, the surface (i.e., a boundary surface) of the molten build materials M becomes similar to or becomes a flat surface due to an action of at least one of a weight and a surface tension of the molten build materials M. That is, the smoothness of the surface (i.e., the boundary surface) of the molten build materials M is improved. Then, when the molten build materials are not irradiated with the processing light EL due to the movement of at least one of the processing head 21 and the stage 31, the molten build materials M are cooled and resolidified (i.e., coagulated). Consequently, as illustrated in FIG. 6C, the build materials M that are resolidified to have a smoothed surface (or, having improved flatness, and/or, having reduced surface roughness) constitute the processing target surface PS. In this manner, the processing target surface PS (i.e., the surface of the three-dimensional structural object ST) is smoothed by the smoothing operation.

The control apparatus 7 repeats a series of smoothing process including: the melting of the build materials M by the irradiation of the processing light EL; and the solidification of the molten build materials M, while moving at least one of the processing head 21 and the stage 31. In other words, the control apparatus 7 repeats a series of smoothing process while changing the relative positional relationship between the processing head 21 and the three-dimensional structural object ST supported by the stage 31. Specifically, the processing system SYS may set a desired surface part of the surface of the three-dimensional structural object ST on the processing target surface PS on the basis of information about at least one of a shape and a position of the three-dimensional structural object ST (i.e., the position on the workpiece W), and may move at least one of the processing head 21 and the stage 31 such that the set processing target surface PS is irradiated with the processing light EL. Since the processing system SYS performs the smoothing operation after performing the build operation, the information about at least one of the shape and the position of the three-dimensional structural object ST that is a target of the smoothing operation, is usually known to the processing system SYS. The processing system SYS, however, may measure at least one of the position and the shape of the three-dimensional structural object ST by using the measurement apparatus after measuring the three-dimensional structural object ST by the build operation, and may move at least one of the processing head 21 and the stage 31 such that the processing target surface PS is irradiated with the processing light EL on the basis of a measurement result of the measurement apparatus.

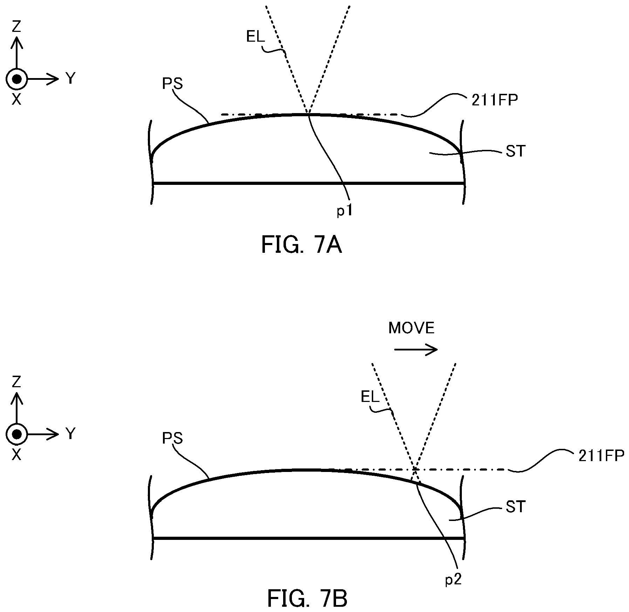

The surface of the three-dimensional structural object ST may include a curved surface. In this case, when the relative positional relationship between the processing head 21 and the three-dimensional structural object ST is changed, a relative positional relationship may be changed between the condensed plane 211FP on which the processing light EL is condensed and the processing target surface PS (especially, a positional relationship along a propagating direction of the processing light EL, and a positional relationship along the Z-axis direction in the example illustrated in FIG. 6A to FIG. 6C). For example, FIG. 7A illustrates the processing light EL with which a first part p1 of the processing target surface PS is irradiated in a state where the first part p1 of the processing target surface PS, which is a curved surface protruding toward the + Z side, is located on the condensed plane 211FP. In this case, the first part p1 of the processing target surface PS is irradiated with the processing light EL that is condensed on the first part p1. On the other hand, when the processing head 21 is moved along a direction along the XY plane (e.g., the Y-axis direction) in the state illustrated in 7A, a second part p2 of the processing target surface PS that is away from the condensed plane 211FP in the Z-axis direction is irradiated with the processing light EL, as illustrated in FIG. 7B. In this case, the second part p2 is irradiated with the processing light EL that is not condensed on the second part p2. That is, the second part p2 is irradiated with the processing light EL in a defocused state. Therefore, when the relative positional relationship between the condensed plane 211FP and the processing target surface PS in the propagating direction of the processing light EL is changed, there is a possibility that the fluence of the processing light EL on the processing target surface PS is changed. When the fluence of the processing light EL on the processing target surface PS is changed, there is a possibility that a molten amount of the processing target surface PS is changed. Consequently, the processing target surface PS may not be properly smoothed. Therefore, the processing system SYS may control the relative positional relationship between the condensed plane 211FP and the processing target surface PS to properly control the processing target surface PS, under the control of the control apparatus 7. For example, when the irradiation optical system 211 includes a condensing control optical member that is configured to control a position of the condensed plane 211FP (i.e., a focus position or focal position of the processing light EL), the processing system SYS may control the condensing control optical member to maintain the relative positional relationship between the condensed plane 211FP and the processing target surface PS, under the control of the control apparatus 7. For example, the processing system SYS may move at least one of the processing heads 21 and the stages 31 that supports the three-dimensional structural object ST so as to maintain the relative positional relationship between the condensed plane 211FP and the processing target surface PS, under the control of the control apparatus 7. As described above, since the information about at least one of the shape and the position of the three-dimensional structural object ST is known to the processing system SYS, the processing system SYS may control the relative positional relationship between the condensed plane 211FP and the processing target surface PS to maintain the relative positional relationship between the condensed plane 211FP and the processing target surface PS, on the basis of the information.

As described above, when the smoothing operation is performed, the build materials M are not supplied from the material nozzle 212. Therefore, there are no build materials M that may block or shield at least a part of the processing light EL, between the irradiation optical system 211 that emits the processing light EL and the processing target surface PS that is irradiated with the processing light EL. In this case, when the processing light EL is reflected by the processing target surface PS that is irradiated with the processing light EL, the reflected light of the processing light EL may return to the irradiation optical system 211 while maintaining a constant intensity. Consequently, there is a possibility that the irradiation optical system 211 is damaged by the reflected light of the processing light EL that returns to the irradiation optical system 211. Especially, when the processing light EL vertically enters the processing target surface PS, the reflected light of the processing light EL is likely to return to the irradiation optical system 211 while maintaining a constant intensity. Therefore, the processing system SYS may change the relative positional relationship between the processing head 21 and the three-dimensional structural object ST such that the processing light EL obliquely enters the processing target surface PS, under the control of the control apparatus 7. Specifically, the processing system SYS may move, and typically rotate, at least one of the processing head 21 and the stages 31 that supports the three-dimensional structural object ST such that the processing light EL obliquely enters the processing target surface PS, under the control of the control apparatus 7.

When at least one of the processing head 21 and the stage 31 is moved such that the light processing EL obliquely enters the processing target surface PS, the control apparatus 7 may determine whether or not the light processing EL obliquely enters the processing target surface PS, on the basis of a detection result of the processing light EL by the returned light detector 213. Specifically, when the light processing EL obliquely enters the processing target surface PS, the intensity of the returned light is considered to be lower than that when the processing light PS vertically enters the processing apparatus surface EL. Therefore, when the intensity of the returned light is lower than a predetermined first intensity threshold, the control apparatus 7 may determine that the processing light EL obliquely enters the processing target surface PS. On the other hand, when the intensity of the returned light is higher than the predetermined first intensity threshold (or, a predetermined second intensity that is higher than the first intensity threshold), the control apparatus 7 may determine that the processing light EL vertically enters the processing target surface PS. When determining that the processing light EL vertically enters the processing target surface PS, the control apparatus 7 may move at least one of the processing head 21 and the stage 31 such that the processing light EL obliquely enters the processing target surface PS.

The processing system SYS may control the fluence of the processing light EL to be less than an energy amount of the processing light EL on the processing target surface PS in performing the smoothing operation (specifically, an energy amount per unit time, applied to the processing target surface PS by the processing light EL) or an energy amount of the processing light EL on the processing target surface PS in performing the build operation. As the energy amount of the processing light EL is reduced, the molten amount of the build materials M (e.g., the molten amount per unit time) is reduced. Therefore, the processing system SYS is capable of performing the smoothing operation by controlling the energy amount of the processing light EL, without melting a necessary amount or more of the build materials M. That is, the processing system SYS is capable of completing the smoothing operation by melting the build materials M the amount of which is necessary to smooth the processing target surface PS. Consequently, in comparison with a case of melting the necessary amount or more of the build materials M, the processing target surface PS on which the smoothing operation is performed may be smoother, and the dimensional accuracy of the three-dimensional structural object ST may not be reduced.

The processing system SYS may control the energy amount of the processing light EL by controlling a not-illustrated light amount adjustment member provided for the light source 4 and/or the irradiation optical system 211. The processing system SYS may control the energy amount of the processing light EL by controlling the relative positional relationship between the condensed plane 211FP and the processing target surface PS. This is because the energy amount of the processing light EL is reduced as the condensed plane 211FP and the processing target surface PS are farther away from each other. The processing system SYS may control the energy amount of the processing light EL by controlling a sweeping speed at which the processing light EL sweeps the processing target surface PS. This is because the energy amount of the processing light EL is reduced as the sweeping speed at which the processing light EL sweeps the processing target surface PS becomes higher.

The processing-system SYS may irradiate the same part of the processing target surface PS with the processing light EL a plurality of times. Specifically, the processing system SYS may melt the build materials M in one part of the processing target surface PS by irradiating the one part with the processing light EL, and may irradiate the one portion again with the processing light EL after the build materials M that are molten in the one part are solidified. That is, the processing-system SYS may gradually smooth the processing target surface PS. Consequently, in comparison with a case of smoothing the processing target surface PS at a time, the processing target surface PS that is subject to the smoothing operation may be smoother.

The processing system SYS may perform the melting operation for a purpose that is different from the purpose of smoothing at least a part of the surface of the three-dimensional structural object ST. For example, the processing system SYS may perform the melting operation to connect (typically, integrate) the three-dimensional structural object ST with another object. An example of an operation for connecting two objects with a molten object is a welding operation. Thus, the processing system SYS may perform the melting operation to weld the three-dimensional structural object ST and another object. In this case, the melting operation may be referred to as a welding operation. Specifically, as described above, when the three-dimensional structural object ST (or another object) is irradiated with the processing light EL, the build materials M that constitute the three-dimensional structural object ST (or materials that constitute the another object) are molten. The processing system SYS may connect the three-dimensional structural object ST to the another object by using the molten build materials M (or any molten materials) as filler metals.

When the processing system SYS performs the melting operation, an atmosphere that surrounds an irradiation position of the processing light EL may be an inert gas atmosphere. In this case, it is possible to reduce the oxidation of a molten part.

### (3) Configuration of Head Apparatus 23

Next, the head apparatus 23 that is attachable to and detachable from the processing head 21 (especially, the lens barrel 214) will be described. In the example embodiment, at least one of a first head apparatus 23#1 and a second head apparatus 23#2 is attachable to the processing head 21. Therefore, a configuration of the first head apparatus 23#1 and a configuration of the second head apparatus 23#2 will be described in order below.

### (3-1) Configuration of First Head Apparatus 23#1

Firstly, the first head apparatus 23#1 will be described with reference to FIG. 8. FIG. 8 is a cross-sectional view that illustrate a configuration of the first head apparatus 23#1.

As illustrated in FIG.8, the first head apparatus 23#1 include a cylindrical member 2311#1. The cylindrical member 2311#1 is a tube-like member in which an internal space 2312#1 is formed. In the example illustrated in FIG. 8, the cylindrical member 2311#1 is a cylindrical member extending along a longitudinal direction thereof (the Z-axis direction in the example illustrated in FIG. 8). A cross-sectional shape of the cylindrical member 2311#1 including an axis along a lateral direction of the cylindrical member 2311#1 (i.e., a direction intersecting with the longitudinal direction, and, for example, a direction along the XY plane in the example illustrated in FIG. 8) is circular, but may be another shape (e.g., elliptic or polygonal). The internal space 2312#1 is a space surrounded by the cylindrical member 2311#1. Therefore, in the example illustrated in FIG. 8, the internal space 2312#1 is a space extending along the longitudinal direction of the cylindrical member 2311#1 (the Z-axis direction in the example illustrated in FIG. 8).

The cylindrical member 2311#1 is attachable to and detachable from the lens barrel 214. Therefore, in the cylindrical member 2311#1, there is formed an attachment part 2313#1 that may be attachable to the attachment part 2143 of the lens barrel 214 described above. In the example illustrated in FIG. 8, the attachment part 2313#1 is formed on one end along the longitudinal direction of the cylindrical member 2311#1. The attachment part 2313#1 may include, for example, a member into which the attachment part 2143 of the lens barrel 214 is inserted. As an example, as illustrated in FIG. 8, the attachment part 2313#1 may include a protruding member that protrudes from the periphery (that protrudes upward in the example illustrated in FIG. 8). Alternatively, the attachment part 2313#1 may include a member that is configured to apply a force for attaching the cylindrical member 2311#1 to the lens barrel 214, to the lens barrel 214. For example, the attachment part 2313#1 may include at least one of a vacuum chuck that is capable of sucking the lens barrel 214 by using a negative pressure and an electrostatic chuck that is capable of sucking the lens barrel 214 by using an electrostatic force. However, when the attachment part 2143 that is configured to apply a force for attaching the first head apparatus 23#1 (especially, the cylindrical member 2311#1) to the attachment part 2143, to the first head apparatus 23#1 is formed in the lens barrel 214, the attachment part 2313#1 may not be formed in the cylindrical member 2311#1. On the other hand, when the attachment part 2313#1 that is configured to apply a force for attaching the cylindrical member 2311#1 to the lens barrel 214, to the lens barrel 214 is formed in the cylindrical member 2311#1, the attachment part 2143 may not be formed in the lens barrel 214. In the following, for convenience of explanation, a description will be given to an example in which the attachment part 2313#1 into which at least a part of the lens barrel 214 is inserted is formed in the cylindrical member 2311#1.

On one end along the longitudinal direction of the cylindrical member 2311#1, there is formed an aperture 2314#1. That is, the aperture 2314#1 is formed in the attachment part 2313#1 of the cylindrical member 2311#1. The aperture 2314#1 intersects with the longitudinal direction of the cylindrical member 2311#1. On the other end along the longitudinal direction of the cylindrical member 2311#1 (i.e., the end that is opposite to the one end), there is formed an aperture 2315#1. The aperture 2315#1 intersects with the longitudinal direction of the cylindrical member 2311#1. Each of the apertures 2314#1 and 2315#1 connects the internal space 2312#1 with an external space of the cylindrical member 2311#1.

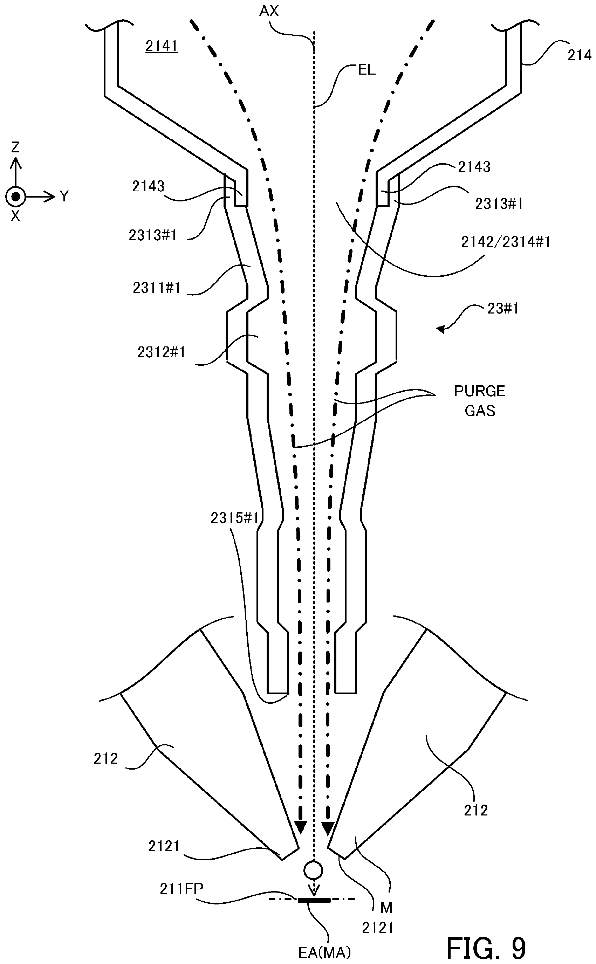

The first head apparatus 23#1 is attachable to the lens barrel 214 through the attachment parts 2143 and 2313#1 such that the emitting port 2142 of the lens barrel 214 is connected to the aperture 2314#1 of the first head apparatus 23#1. That is, the first head apparatus 23#1 is attachable to the lens barrel 214 through the attachment parts 2143 and 2313#1 such that the internal space 2141 of the head barrel 214 is connected to the internal space 2312#1 of the first head apparatus 23#1 through the emitting port 2142 and the aperture 2314#1. The first head apparatus 23#1 attachable to the lens barrel 214 is illustrated in FIG. 9.

As described above, the processing light EL is emitted from the emitting port 2142 of the lens barrel 214. Therefore, as illustrated in FIG. 9 that is a cross-sectional view that illustrates an optical path of the processing light in the first head apparatus 23#1, the processing light EL emitted from the emitting port 2142 enters the internal space 2312#1 of the first head apparatus 23#1 through the aperture 2314#1. Therefore, the aperture 2314#1 may be referred to as an incident port. The processing light EL entering the internal space 2312#1 passes through the internal space 2312#1 and reaches the aperture 2315#1. Therefore, each of the apertures 2314#1 and 2315#1 may be formed at an appropriate position such that the processing light EL emitted from the lens barrel 214 (i.e., the processing light EL emitted from the irradiation optical system 211) is capable of passing through both the apertures 2314#1 and 2315#1. For example, each of the apertures 2314#1 and 2315#1 may be formed on the optical axis AX of the irradiation optical system 211. The processing light EL reaching the aperture 2315#1 is emitted to the outside of the first head apparatus 23#1 from the internal space 2312#1 through the aperture 2315#1. Therefore, the aperture 2315#1 may be referred to as an emitting port.

As described above, in addition to or instead of the processing light EL, the purge gas supplied from the gas supply apparatus 5 flows out from the emitting port 2142 of the lens barrel 214. Therefore, as illustrated in FIG. 9 that is a cross-sectional view that illustrates a flow path of the purge gas in the first head apparatus 23#1, the purge gas flowing out from the emitting port 2142 flows into the internal space 2312#1 of the first head apparatus 23#1 through the aperture 2314# 1. Therefore, the aperture 2314#1 may be referred to as an inlet. In this case, it may be considered that the gas supply apparatus 5 supplies the purge gas to the internal space 2312#1 of the first head apparatus 23#1. The purge gas flowing into the internal space 2312#1 passes through the internal space 2312#1 and reaches the aperture 2315#1. The purge gas reaching the aperture 2315#1 flows out to the outside of the first head apparatus 23#1 from the internal space 2312#1 through the aperture 2315#1. Therefore, the aperture 2315#1 may be referred to as an outlet.

The first head apparatus 23#1 may be attachable to the lens barrel 214, for example, in at least a part of a period in which the processing system SYS performs the build operation for forming the three-dimensional structural object ST. In this case, the processing system SYS may irradiate the workpiece W with the processing light EL emitted from the irradiation optical system 211, through the first head apparatus 23#1. Specifically, as illustrated in FIG. 9, the processing system SYS emits the processing light EL emitted from the irradiation optical system 211, toward the build materials M (or, the melt pool MP) supplied by the material nozzle 212 to the workpiece W, from the aperture 2315#1 of the first head apparatus 23#1. Consequently, the processing system SYS is capable of properly forming the three-dimensional structural object ST even when the first head apparatus 23#1 is attachable to the lens barrel 214.

When the first head apparatus 23#1 is attachable to the lens barrel 214, the above-described unnecessary substance (e.g., at least one of fumes and unnecessary build materials M) is less likely to adhere to the irradiation optical system 211, as compared to when the first head apparatus 23#1 is not attachable to the lens barrel 214. This is because the cylindrical member 2311#1 of the first head apparatus 23#1 may serve as a cover member that blocks the unnecessary substance. Furthermore, since the purge gas flows out from the aperture 2315#1 of the first head apparatus 23#1, it is unlikely that the unnecessary substance penetrates into the internal space 2312#1 of the first head apparatus 23#1 through the aperture 2315#1. Even in this sense, the unnecessary substance is less likely to reach the irradiation optical system 211 through the internal space 2312#1 of the first head apparatus 23#1.

When the first head apparatus 23#1 is attachable to the lens barrel 214 in at least a part of the period in which the processing system SYS performs the build operation, as illustrated in FIG. 9, the first head apparatus 23#1 may be attachable to the lens barrel 214 such that the aperture 2315#1 of the first head apparatus 23#1 is disposed in the vicinity of the material supply port 2121 of the material nozzle 212. In other words, the first head apparatus 23#1 may have such a shape and a size that allow the aperture 2315#1 of the first head apparatus 23#1 to be disposed in the vicinity of the material supply port 2121 of the material nozzle 212. No that a state in which "the aperture 2315#1 is disposed in the vicinity of the material supply port 2121" may mean a state in which "the aperture 2315#1 is located in a range that is less than or equal to a predetermined distance from the material supply port 2121". In this case, at least a part of the purge gas flowing out from the aperture 2315#1 forms a flow of the purge gas around the material supply port 2121. Typically, at least a part of the purge gas flowing out from the aperture 2315#1 is sprayed on the material supply port 2121. Consequently, compared to when the purge gas flowing out from the aperture 2315#1 does not form a flow of the purge gas around the material supply port 2121, the unnecessary substance such as fumes is less likely to adhere to the material supply port 2121 (and furthermore to the material nozzle 212). Then, at least a part of the purge gas flowing out from the aperture 2315#1 is sprayed on the target irradiation area EA. Consequently, it is likely that the oxygen content of an ambient atmosphere of the target radiation area EA is reduced.

The first head apparatus 23#1 may be attachable to the lens barrel 214 in at least a part of a period in which the processing system SYS performs the processing operation for processing the three-dimensional structural object ST. That is, the processing system SYS may irradiate the surface of the three-dimensional structural object ST (especially, the processing target surface PS) with the processing light EL emitted from the irradiation optical system 211, through the first head apparatus 23#1. Consequently, the processing system SYS is capable of properly processing the three-dimensional structural object ST even when the first head apparatus 23#1 is attachable to the lens barrel 214. Especially when the first head apparatus 23#1 is attachable to the lens barrel 214, the processing system SYS emits the processing light EL along the optical axis AX of the irradiation optical system 211. Therefore, the processing system SYS is capable of processing the processing target surface PS that intersects with the optical axis AX.

### (3-2) Configuration of Second Head Apparatus 23#2

Next, with reference to FIG. 10, a second head apparatus 23#2 will be described. FIG. 10 is a cross-sectional view that illustrates a configuration of the second head apparatus 23#2.

As illustrated in FIG. 10, the second head apparatus 23#2 includes a cylindrical member 2311#2. The cylindrical member 2311#2 is a tube-like member in which an internal space 2312#2 is formed. In the example illustrated in FIG. 10, the cylindrical member 2311#2 is a cylindrical member extending along a longitudinal direction thereof (the Z-axis direction in the example illustrated in FIG. 10). A cross-sectional shape of the cylindrical member 2311#2 including an axis along a lateral direction of the cylindrical member 2311#2 (i.e., a direction intersecting with the longitudinal direction, and, for example, a direction along the XY plane in the example illustrated in FIG. 10) is circular, but may be another shape (e.g., ellipse or polygonal). The internal space 2312#2 is a space surrounded by the cylindrical member 2311#2. Therefore, in the example illustrated in FIG. 10, the internal space 2312#2 is a space extending along the longitudinal direction of the cylindrical member 2311#2 (the Z-axis direction in the example illustrated in FIG. 10).

The cylindrical member 2311#2 is attachable to and detachable from the lens barrel 214. Therefore, in the cylindrical member 2311#2, there is formed an attachment part 2313#2 that may be attachable to the attachment part 2143 of the lens barrel 214 described above. In the example illustrated in FIG. 10, the attachment part 2313#2 is formed on one end along the longitudinal direction of the cylindrical member 2311#2. Note that the attachment part 2313#2 of the second head apparatus 23#2 may have the same characteristics as those of the attachment part 2313#1 of the first head apparatus 23#1 described above. Therefore, a description of the attachment part 2313#2 will be omitted.

On one end along the longitudinal direction of the cylindrical member 2311#2, there is formed an aperture 2314#2. That is, the aperture 2314#2 is formed in the attachment part 2313#2 of the cylindrical member 2311#2. The aperture 2314#2 intersects with the longitudinal direction of the cylindrical member 2311#2. On the other end along the longitudinal direction of the cylindrical member 2311#2 (i.e., the end that is opposite to the one end), there is formed an aperture 2315#2. The aperture 2315#2 intersects with the longitudinal direction of the cylindrical member 2311 #2. Each of the apertures 2314#2 and 2315#2 connects the internal space 2312#2 with an external space of and the cylindrical member 2311#2.

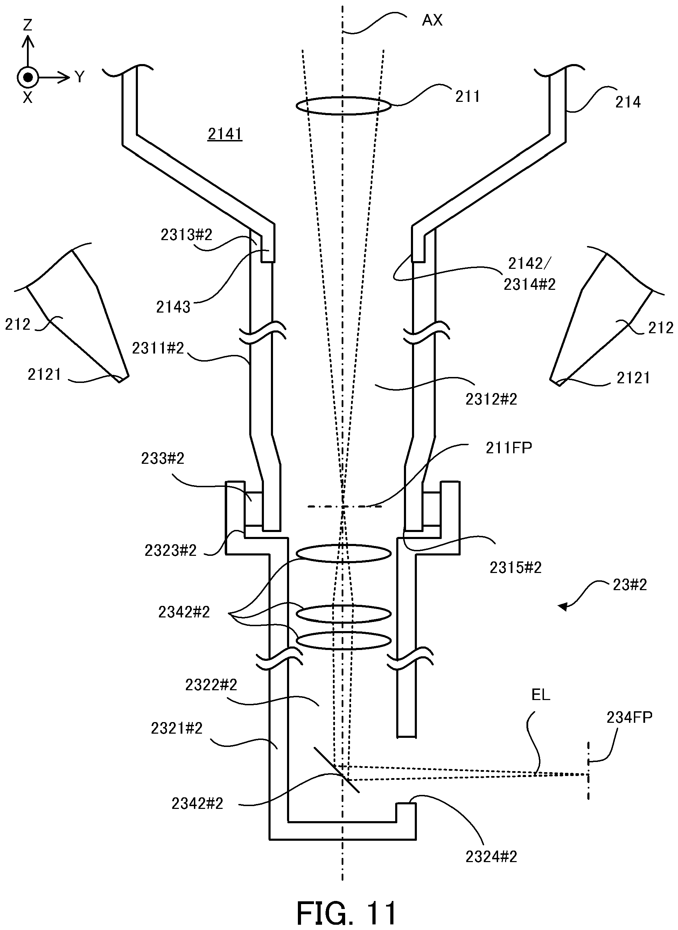

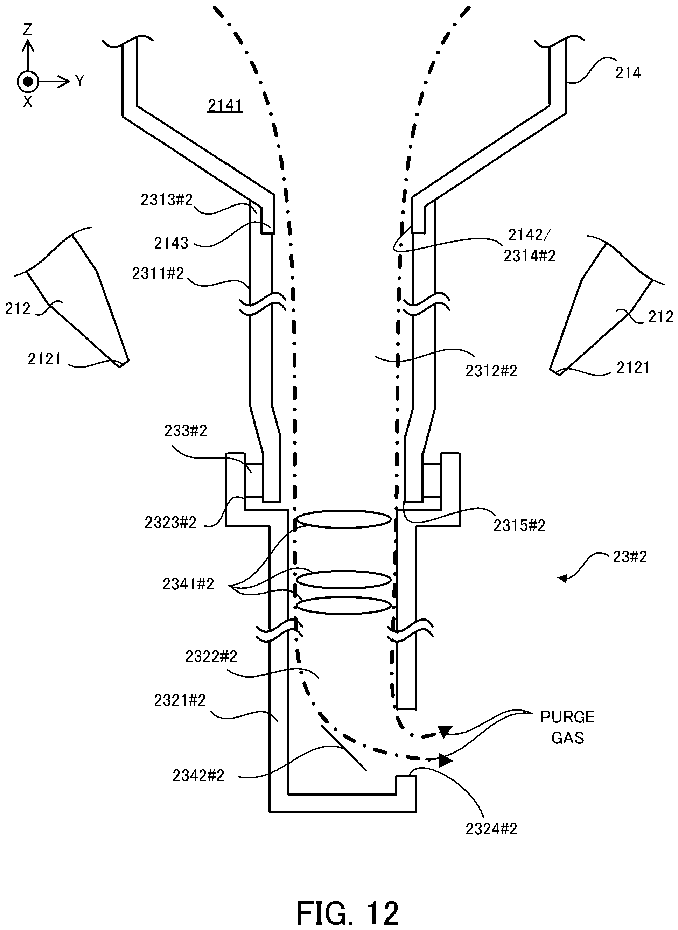

The cylindrical member 2311#2 is attachable to the lens barrel 214 through the attachment parts 2143 and 2313#2 such that the emitting port 2142 of the lens barrel 214 is connected to the aperture 2314#2 of the cylindrical member 2311#2. That is, the cylindrical member 2311#2 is attachable to the lens barrel 214 through the attachment parts 2143 and 2313#2 such that the internal space 2141 of the lens barrel 214 is connected to the internal space 2312#2 of the cylindrical member 2311#2 through the emitting port 2142 and the aperture 2314#2. The cylindrical member 2311#2 attachable to the lens barrel 214 is illustrated in FIG. 11 and FIG. 12.

Note that the cylindrical member 2311#1 of the first head apparatus 23#1 described above may be used as the cylindrical member 2311#2 of the second head apparatus 23#2.

The second head apparatus 23#2 further includes a cylindrical member 2321#2. The cylindrical member 2321#2 is a separate member from the cylindrical member 2311#2. The cylindrical member 2321#2, however, may be integrated with the cylindrical member 2311#2. The cylindrical member 2321#2 is a tube-like member in which an internal space 2322#2 is formed. In the example illustrated in FIG. 10, the cylindrical member 2321#2 is a cylindrical member extending along a longitudinal direction thereof (the Z-axis direction in the example illustrated in FIG. 10), similarly to the cylindrical member 2311#2. A cross-sectional shape of the cylindrical member 2321#2 including an axis along a lateral direction of the cylindrical member 2321#2 (i.e., a direction intersecting with the longitudinal direction, and, for example, the direction along the XY plane in the example illustrated in FIG. 10) is circular, but may be another shape (e.g., elliptic or polygonal). The internal space 2322#2 is a space surrounded by the cylindrical member 2321#2. Therefore, in the example illustrated in FIG. 10, the internal space 2322#2 is a space extending along the longitudinal direction of the cylindrical member 2321#2 (the Z-axis direction in the example illustrated in FIG. 10).

On one end along the longitudinal direction of the cylindrical member 2321#2, there is formed an aperture 2323#2. The aperture 2323#2 intersects with the longitudinal direction of the cylindrical member 2321#2. The cylindrical member 2321#2 is attachable to the cylindrical member 2311#2 such that the internal space 2322#2 of the cylindrical member 2321#2 is connected to the internal space 2312#2 of the cylindrical member 2311#2, through the aperture 2323#2 of the cylindrical member 2321#2 and the aperture 2315#2 of the cylindrical member 2311#2. Specifically, the cylindrical members 2311#2 and 2321#2 are tube-like members. In this case, the cylindrical member 2321#2 may be attachable to the cylindrical member 2311#2 such that one of the cylindrical members 2311#2 and 2321#2 is inserted into the other of the cylindrical members 2311#2 and 2321#2. In the example illustrated in FIG. 10, the cylindrical member 2321#2 is attachable to the cylindrical member 2311#2 such that the other end of the cylindrical member 2311#2 (i.e., a -Z side end) is inserted into the internal space 2322#2 of the cylindrical member 2321#2 through the aperture 2323#2 of the cylindrical member 2321#2. Therefore, in the example illustrated in FIG. 10, a size of the aperture 2323#2 of the cylindrical member 2321#2 is larger than a size of the aperture 2315#2 of the cylindrical member 2311#2. When the cylindrical member 2311#2 is inserted into the internal space 2322#2 of the cylindrical member 2321#2, the cylindrical members 2311#2 and 2321#2 are aligned along the longitudinal direction of the cylindrical members 2311#2 and 2321#2 (i.e., the Z-axis direction, and the direction along the optical axis AX of the irradiation optical system 211).

The cylindrical member 2321#2 is attachable to the cylindrical member 2311#2 so as to be movable with respect to the cylindrical member 2311#2. More specifically, the cylindrical member 2321#2 is attachable to the cylindrical member 2311#2 so as to be rotatable (i.e., so as to be rotatably movable) around the axis along the longitudinal direction of the cylindrical member 2321#2 (i.e., the Z-axis, and the axis along the optical axis AX of the irradiation optical system 211). For example, the cylindrical member 2321#2 may be attachable to the cylindrical member 2311#2 through a driving system 233#2 that is configured to move the cylindrical member 2321#2 with respect to the cylindrical member 2311#2. The driving system 233#2 is any driving system that is configured to rotate the cylindrical member 2321#2 around the axis along the longitudinal direction of the cylindrical member 2321#2. The driving system 233#2 may include, for example, a hollow motor.

As described above, the processing light EL is emitted from the emitting port 2142 of the lens barrel 214. Therefore, as illustrated in FIG. 11 that illustrates an optical path of the processing light EL in the second head apparatus 23#2, the processing light EL emitted from the emitting port 2142 enters the internal space 2312#2 of the cylindrical member 2311#2 through the aperture 2314#2. Therefore, the aperture 2314#2 may be referred to as an incident port. The processing light EL entering the internal space 2312#2 passes through the internal space 2312#2 and reaches the aperture 2315#2. Therefore, each of the apertures 2314#2 and 2315#2 may be formed at an appropriate position such that the processing light EL emitted from the lens barrel 214 (i.e., the processing light EL emitted from the irradiation optical system 211) is capable of passing through both the apertures 2314#2 and 2315#2. For example, each of the apertures 2314#2 and 2315#2 may be formed on the optical axis AX of the irradiation optical system 211. The processing light EL reaching the aperture 2315#2 enters the internal space 2322#2 of the cylindrical member 2321#2 through the aperture 2323#2 that is connected to the aperture 2315#2 and the aperture 2315#2.

Referring again to FIG. 10, the second head apparatus 23#2 further includes an irradiation optical system 234#2. The irradiation optical system 234#2 is disposed on the optical path of the processing light EL in at least one of the internal spaces 2312#2 and 2322#2. When the irradiation optical system 234#2 is disposed in the internal space 2312#2, the cylindrical member 2311#2 may hold the irradiation optical system 234#2 that is disposed in the internal space 2312#2. When the irradiation optical system 234#2 is disposed in the internal space 2322#2, the cylindrical member 2321#2 may hold the irradiation optical system 234#2 that is disposed in the internal space 2322#2. At least one of the cylindrical members 2311#2 and 2321#2 may serve as a housing member that contains the irradiation optical system 234#2 (i.e., a housing member that includes the irradiation optical system 234#2). The second head apparatus 23#2 may be referred to as an optical apparatus because it includes the irradiation optical system 234#2. In the following, a description will be given to an example in which the irradiation optical system 234#2 is disposed in the internal space 2322#2.

As illustrated in FIG. 11, the processing light EL emitted from the irradiation optical system 211 enters the irradiation optical system 234#2. The irradiation optical system 234#2 condenses the processing light EL emitted from the irradiation optical system 211 on a condensed plane 234FP that is set at a different position from that of the condensed plane 211FP on which the irradiation optical system 211 condenses the processing light EL. That is, the irradiation optical system 234#2 condenses the processing light EL at a different position from the position on which the irradiation optical system 211 condenses the processing light EL.

In order to condense the processing light EL on the condensed plane 234FP that is different from the condensed plane 211FP, the irradiation optical system 234#2 includes a condensing optical system 2341#2. The condensing optical system 2341#2 condenses, on the condensed plane 234FP, the processing light EL entering the condensing optical system 2341#2. The condensing optical system 2341#2 forms, on the condensed plane 234FP, an image that is formed by the irradiation optical system 211 on the condensed plane 211FP. Therefore, the condensing optical system 2341#2 may be referred to as an imaging optical system. In this case, the condensed plane 234FP optically conjugates with the condensed plane 211FP. That is, the condensing optical system 2341#2 condenses the processing EL on the condensed plane 234FP that optically conjugates with the condensed plane 211FP. An optical axis of the condensing optical system 2341#2 is coincident with, but may be different from, the optical axis AX of the irradiation optical system 211.

The condensed plane 234FP is away from the condensed plane 211FP along a cross direction intersecting with the optical axis AX (a direction along the XY plane in the example illustrated in FIG. 11). That is, the irradiation optical system 234#2 condenses the processing light EL emitted from the irradiation optical system 211, on the condensed plane 234FP that is set at a position away from the condensed plane 211FP along the cross direction intersecting with the optical axis AX. Since the condensed plane 211FP is an optical surface intersecting with the optical axis AX, the condensed plane 234FP is away from the optical axis AX along the cross direction intersecting with the optical axis AX (the direction along the XY plane in the example illustrated in FIG. 11). That is, the irradiation optical system 234#2 condenses the processing light EL emitted from the irradiation optical system 211, on the condensed plane 234FP that is set at a position away from the optical axis AX along the cross direction intersecting with the optical axis AX. In order to condense the processing light EL on the condensed plane 234FP that is away from the condensed plane 211FP along the cross direction intersecting with the optical axis AX, the irradiation optical system 234#4 further includes a deflection optical system 2342#2. The deflection optical system 2342#2 deflects the processing light EL emitted from the condensing optical system 2341#2, toward the cross direction intersecting with the optical axis AX. That is, the deflection optical system 2342#2 deflects the processing light EL such that the propagating direction of the processing light EL is changed from the direction along the optical axis AX to the cross direction intersecting with the optical axis AX. For example, the deflection optical system 2342#2 may deflect the processing light EL by reflecting the processing light EL emitted from the condensing optical system 2341#2 toward the cross direction intersecting with the optical axis AX.

In the cylindrical member 2321#2 that contains the deflection optical system 2342#2, there is formed an aperture 2324#2 through which the processing light EL deflected by the deflection optical system 2342#2 may pass. Therefore, the processing light EL deflected by the deflection optical system 2342#2 is emitted to the outside of the cylindrical member 2321#2 (i.e., the outside of the second head apparatus 23#2) from the internal space 2322#2 through the aperture 2324#2. Therefore, the aperture 2324#2 may be referred to as an emitting port. The processing light EL emitted from the aperture 2324#2 is condensed on the condensed plane 234FP. Therefore, the condensed plane 234FP is set at the outside of the second head apparatus 23#2.

However, the condensed plane 234FP may not be away from the condensed plane 211FP along the cross direction intersecting with the optical axis AX of the irradiation optical system 211. The condensed plane 234FP and the condensed plane 211FP may be aligned along the optical axis AX. In this case, the irradiation optical system 234#2 may not include the deflection optical system 2342#2.

The cylindrical member 2321 #1 is rotatable around the optical axis AX by the driving system 233#2 as described above. Therefore, in accordance with the rotation of the cylindrical member 2321#2, the irradiation optical system 234#2 held by the cylindrical member 2321#2 is also rotated around the optical axis AX. When the irradiation optical system 234#2 is rotated around the optical axis AX, the deflection optical system 2342#2 is rotated around the optical axis AX. Consequently, a deflection direction of the processing light EL by the deflection optical system 2342#2 is changed to be around the optical axis AX. That is, an emitting direction of the processing light EL from the deflection optical system 2342#2 (i.e., the propagating direction of the processing light EL emitted from the deflection optical system 2342#2) is changed to be around the optical axis AX. When the irradiation optical system 234#2 is rotated around the optical axis AX, the aperture 2324#2 (the exiting port) from which the processing light EL is emitted, is also rotated around the optical axis AX. Consequently, the emitting direction of the processing light EL from the aperture 2324#2 is also changed to be around the optical axis AX.

As described above, in addition to or instead of the processing light EL, the purge gas supplied from the gas supply apparatus 5 flows out from the emitting port 2142 of the lens barrel 214. Therefore, as illustrated in FIG. 12 that illustrates a flow path of the purge gas in the second head apparatus 23#2, the purge gas flowing out from the emitting port 2142 flows into the internal space 2312#2 of the cylindrical member 2311#2 through the aperture 2314#2. Therefore, the aperture 2314#2 may be referred to as an inlet. The processing light EL flowing into the internal space 2312#2 passes through the internal space 2312#2 and reaches the aperture 2315#2. The purge gas reaching the aperture 2315#2 flows into the internal space 2322#2 of the cylindrical member 2321#2 through the apertures 2315#2 and 2323#2. In this case, it may be considered that the gas supply apparatus 5 supplies the purge gas to the internal spaces 2312#2 and 2322#2 of the second head apparatus 23#2. The purge gas flowing into the internal space 2322#2 passes through the internal space 2322#2 and reaches the aperture 2324#2. The purge gas reaching the aperture 2324#2 flows out to the outside of the second head apparatus 23#2 from the internal space 2322#2 through the aperture 2324#2. Therefore, the aperture 2324#2 may be referred to as an outlet.

The irradiation optical system 234#2 is disposed in the internal space 2322#2. In this case, it may be considered that the gas supply apparatus 5 supplies the purge gas to the irradiation optical system 234#2. That is, it may be considered that the gas supply apparatus 5 supplies the purge gas to the irradiation optical system 234#2 by supplying the purge gas to the internal space 2322#2. The purge gas supplied to the irradiation optical system 234#2 may be used to cool the irradiation optical system 234#2. The purge gas supplied to the irradiation optical system 234#2 may be used to prevent the unnecessary substance from adhering to the irradiation optical system 234#2.

When the cylindrical member 2321#2 holds the irradiation optical system 234#2 as described above, however, the cylindrical member 2321#2 may hold the irradiation optical system 234#2 such that an optical member that constitutes the irradiation optical system 234#2 is in close contact with the cylindrical member 2321#2. In this case, the purge gas flowing into the internal space 2322#2 of the cylindrical member 2321#2 may be locally stagnated in the internal space 2322#2. Consequently, the irradiation optical system 234#2 may not be properly cooled. Specifically, when the irradiation optical system 234#2 includes a plurality of optical members, the purge gas flowing into the internal space 2322#2 is supplied to one of the optical members that is the closest to the aperture 2323#2. On the other hand, when one optical member is in close contact with the cylindrical member 2321#2, a flow of the purge gas supplied to the one optical member is blocked by the one optical member. Consequently, the purge gas is not supplied to the other optical members that are other than the one of the optical members.

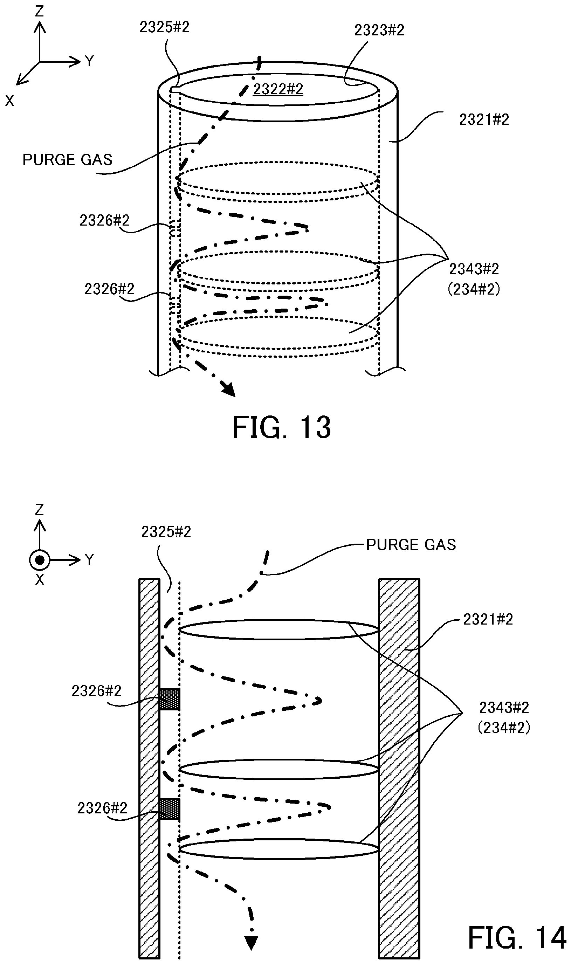

Thus, a supply path for supplying the purge gas to each of the plurality of optical members of the irradiation optical system 234#2 may be formed in the cylindrical member 2321#2. For example, as illustrated in FIG. 13 that is a transmission perspective view that illustrates an example of the cylindrical member 2321#2 in which the supply path of the purge gas is formed, and FIG. 14 that is a cross-sectional view that illustrates an example of the cylindrical member 2321#2 in which the supply path of the purge gas is formed, a groove 2325#2 that may serve as the supply path for supplying the purge gas may be formed on an inner wall surface of the cylindrical member 2321#2 (i.e., a surface facing the internal space 2322#2). The groove 2325#2 extends along a direction in which a plurality of optical member 2343#2 of the irradiation optical system 234#2 are aligned (the Z-axis direction in the example illustrated in FIG. 13 and FIG. 14). In this case, the purge gas is sequentially supplied to the plurality of optical members 2343#2 of the irradiation optical system 234#2 through the groove 2325#2. The optical member 2343#2 may include an optical member that constitutes the condensing optical system 2341#2, or may include an optical member that constitutes the deflection optical system 2342#2.

At least one barrier member 2326#2 that blocks the purge gas flowing through the groove 2325#2 may be formed in the groove 2325#2. The barrier member 2326#2 may be formed in such a part of the groove 2325#2 that is located between two adjacent optical members 2343#2. When the barrier member 2326#2 is formed, the purge gas flowing through the groove 2325#2 flows out in a direction of being away from the groove 2325#2, due to the barrier member 2326#2. Consequently, compared to when the purge gas continues to flow through the groove 2325#2 (i.e., when the purge gas does not flow out toward the direction of being away from the groove 2325#2), there are more parts of each optical member 2343#2 that are exposed to the purge gas. Consequently, each optical member 2343#2 is cooled, more properly.

The second head apparatus 23#2 may be attachable to the lens barrel 214, for example, in at least a part of the period in which the processing system SYS performs the processing operation for processing the three-dimensional structural object ST. In this case, the processing system SYS is configured to irradiate the three-dimensional structural object ST with the processing light EL emitted from the irradiation optical system 211, through the second head apparatus 23#2 (i.e., by using the second head apparatus 23#2). Consequently, the processing system SYS is capable of properly processing the three-dimensional structural object ST even when the second head apparatus 23#2 is attachable to the lens barrel 214. In this case, the second head apparatus 23#2 may be referred to as a processing apparatus because it is used to process the three-dimensional structural object ST.

Especially in the example embodiment, the deflection optical system 2342#2 deflects the processing light EL toward the direction intersecting with the optical axis AX. Therefore, the processing system SYS is capable of irradiating the processing target surface PS located along the optical axis AX (e.g., the processing target surface PS located along the Z-axis) with the processing light EL emitted from the second head apparatus 23#2. Consequently, the processing system SYS is capable of irradiating, with the processing light EL, the processing target surface PS that is hardly irradiated with the processing light EL when the deflection optical system 2342#2 is not provided. Therefore, the processing system SYS is capable of processing the three-dimensional structural object ST that is hardly processed when the deflection optical system 2342#2 is not provided.

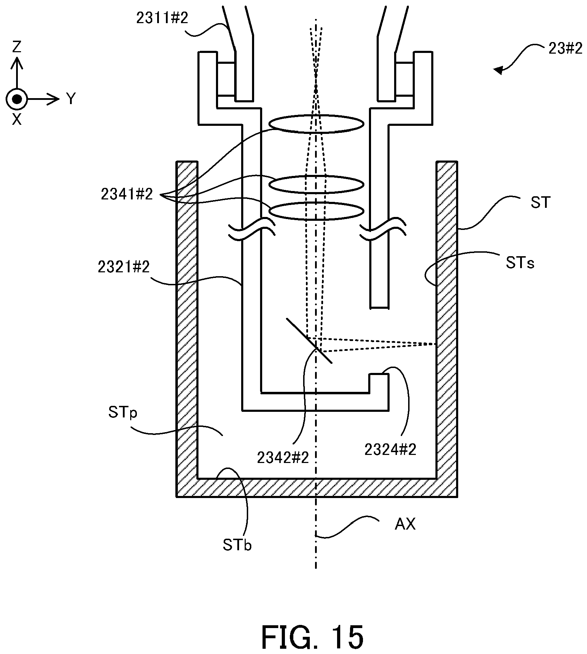

For example, FIG. 15 illustrates a cross section of the second head apparatus 23#2 that emits the processing light EL for processing the three-dimensional structural object ST having a cylindrical shape, along with a cross section of the three-dimensional structural object ST. In this case, a gap or void STp corresponding to a center space of the cylinder is formed in the three-dimensional structural object ST. The surface of the three-dimensional structural object ST facing the gap STp includes not only a bottom surface STb intersecting with the optical axis AX, but also an inner wall surface STs along the optical axis AX. The processing system SYS is capable of irradiating the inner wall surface STs with the processing light EL by using the second head apparatus 23#2. Specifically, the processing system SYS controls a relative positional relationship between the three-dimensional structural object ST and the second head apparatus 23#2 such that the target irradiation area EA is set on the inner wall surface STs (i.e., such that the inner wall surface STs is disposed in the position of the condensed plane 234FP). The processing system SYS may control the relative positional relationship between the three-dimensional structural object ST and the second head apparatus 23#2 by moving at least one of the processing head 21 to which the second head apparatus 23#2 is attached and the stage 31 on which the three-dimensional structural object ST is placed. The processing system SYS may control the relative positional relationship between the three-dimensional structural object ST and the second head apparatus 23#2 by moving the second head apparatus 23#2 by using the driving system 233#2. Consequently, the processing system SYS is capable of irradiating the inner wall surface STs with the processing light EL. Therefore, the processing system SYS is capable of properly processing the inner wall surface STs by using the second head apparatus 23#2. When the second head apparatus 23#2 is removed from the lens barrel 214, the processing system SYS may irradiate the bottom STb with the processing light E. Consequently, the processing system SYS is capable of properly processing the bottom STb.

When the processing system SYS processes the inner wall surface STs, at least a part of the second head apparatus 23#2 that emits the processing light EL may be inserted into the gap STp facing the inner wall surface STs. Therefore, a size of the second head apparatus 23#2 (specifically, a width in the direction intersecting with the optical axis AX) may be set to a size that allows the second head apparatus 23#2 to be inserted into the gap STp. On the other hand, the lens barrel 214 to which the second head apparatus 23#2 is attached may not be inserted into the gap STp. Therefore, a maximum width of the lens barrel 214 (specifically, a maximum value of the width in the direction intersecting with the optical axis AX) may be longer than a maximum width of the second head apparatus 23#2. In other words, the maximum width of the second head apparatus 23#2 may be shorter than the maximum width of the lens barrel 214.

In the example illustrated in FIG. 15, the inner wall surface STs is a cylindrical surface. Therefore, when at least a part of the second head apparatus 23#2 is inserted in the gap STp, the inner wall surface STs is a surface facing the optical axis AX side so as to sandwich or surround the optical axis AX of the irradiation optical system 211 (i.e., the optical axis of the condensing optical system 2341#2). Furthermore, at least a part of the second head apparatus 23#2 (especially, at least a part of the irradiation optical system 234#2) is sandwiched or surrounded by the inner wall surface STs. Therefore, when at least a part of the second head apparatus 23#2 is inserted in the gap STp, the irradiation optical system 234#2 irradiates, with the processing light EL, the inner wall surface STs that sandwiches or surrounds least a part of the optical axis AX and the irradiation optical system 234#2.

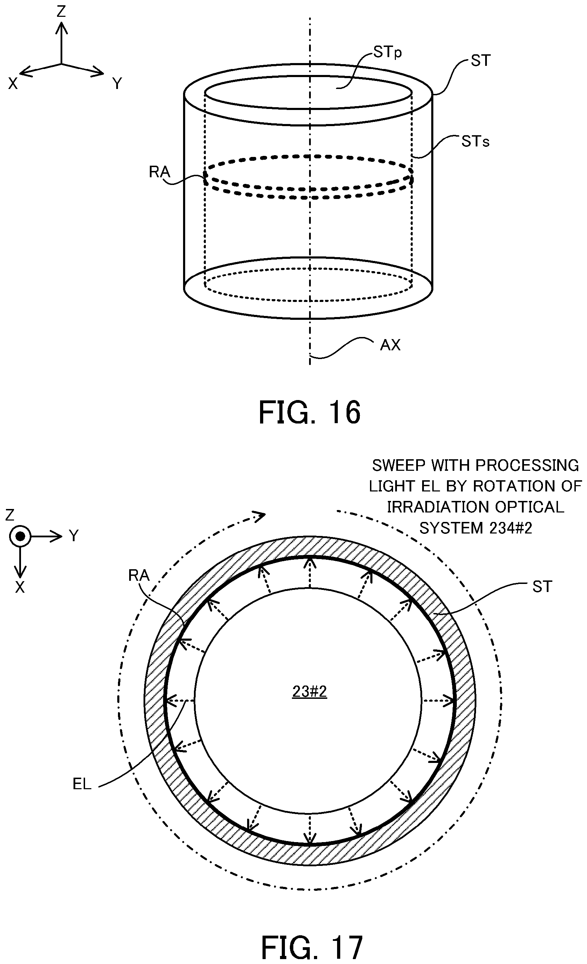

From the second head apparatus 23#2, the processing light EL is emitted toward one direction. On the other hand, as described above, the inner wall surface STs is a surface that sandwiches or surrounds at least a part of the second head apparatus 23#2. Therefore, simply emitting the processing light EL in one direction from the second head apparatus 23#2 only allows the processing system SYS to irradiate a part of the inner wall surface STs with the processing light EL. Thus, the processing system SYS may change the irradiation position of the processing light EL on the inner wall surface STs by controlling the driving system 233#2 to move (specifically, rotate) the irradiation optical system 234#2 (especially, the deflection optical system 2342#2). Specifically, as described above, the driving system 233#2 rotates the cylindrical member 2321#2 around the optical axis AX. Consequently, in accordance with the rotation of the cylindrical member 2321#2, the irradiation optical system 234#2 (especially, the deflection optical system 2342#2) held by the cylindrical member 2321#2 is also rotated around the optical axis AX. Therefore, as illustrated in FIG. 16 that is a transmission perspective view that illustrates the three-dimensional structural object ST in which the cylindrical gap STp is formed, the processing system SYS is capable of changing the irradiation position of the processing light EL in an annular area RA that surrounds the optical axis AX. Consequently, as illustrated in FIG. 17 that is a cross-sectional view that illustrates the processing light EL that is applied to the inner wall surface STs of the three-dimensional structural object ST in which the cylindrical gap STp is formed, the processing system SYS is capable of irradiating the annular area RA with the processing light EL that so as to sweep the annular area RA with the processing light EL. Furthermore, the processing system SYS is capable of moving the annular area RA in the direction along the optical axis AX (the Z-axis direction in the example illustrated in FIG. 16 and FIG. 17) on the inner wall surface STs, by moving at least one of the processing head 21 and the stage 31 in the direction along the optical axis AX. Consequently, the processing system SYS is capable of properly processing a part of the inner wall surface STs that should be processed (i.e., the processing target surface PS). Note that when the irradiation optical system 234#2 is rotated (i.e., is moved), the relative positional relationship between the irradiation optical system 234#2 and the three-dimensional structural object ST is changed. Therefore, the driving system 233#2 that is configured to rotate the irradiation optical system 234#2 may serve as a position change apparatus that is configured to change the relative positional relationship between the irradiation optical system 234#2 and the three-dimensional structural object ST.

The processing system SYS may move (in this case, rotate) the irradiation optical system 234#2 by using the driving system 233#2, without moving the processing head 21 and the stage 31 by using the head driving system 22 and the stage driving system 32. Specifically, the processing system SYS may change the relative positional relationship between the irradiation optical system 234#2 and the three-dimensional structural object ST while maintaining the relative positional relationship between the irradiation optical system 211 of the processing head 21 and the three-dimensional structural object ST placed on the stage 31. For example, when the gap STp has a relatively small width (FIG. 16 and), the processing system SYS is likely to be capable of irradiating the entire processing target surface PS on the inner wall surface STs with the processing light EL when rotating the irradiation optical system 234#2. Therefore, when the gap STp has a relatively small width, the processing system SYS may process the three-dimensional structural object ST by rotating the irradiation optical system 234#2 without moving the processing head 21 and the stage 31.

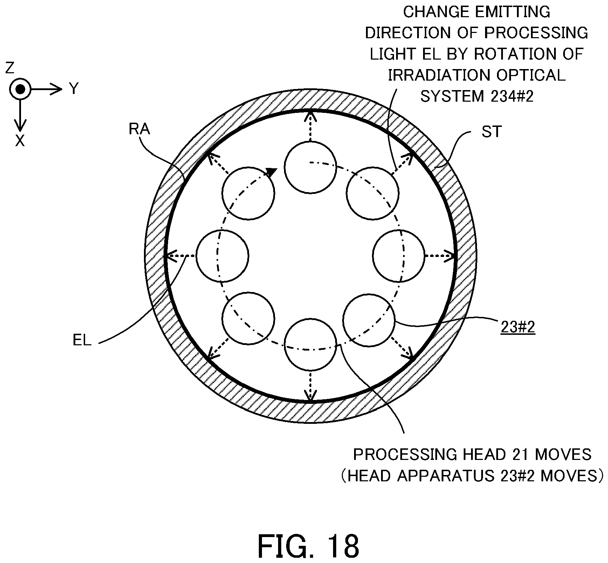

Alternatively, the processing system SYS may move the processing head 21 and the stage 31 by using the head driving system 22 and the stage driving system 32, and may move (in this case, rotate) the irradiation optical system 234#2 by using the driving system 233#2. That is, the processing system SYS may change the relative positional relationship between the irradiation optical system 211 and the three-dimensional structural object ST, and may change the relative positional relationship between the irradiation optical system 234#2 and the three-dimensional structural object ST. For example, when the gap STp has a relatively large width, simply rotating the irradiation optical system 234#2 may not allow the processing system SYS to irradiate the entire processing target surface PS on the inner wall surface STs with the processing light EL. Therefore, when the gap STp has a relatively large width, the processing system SYS may process the three-dimensional structural object ST by moving the processing head 21 and the stage 31 and by rotating the irradiation optical system 234#2. For example, as illustrated in FIG. 18 that is a cross-sectional view that illustrates the processing light EL that is applied to the inner wall surface STs of the three-dimensional structural object ST in which the cylindrical gap STp is formed, the processing system SYS may move the processing head 21 such that the second head apparatus 23#2 moves along a circular moving trajectory that is along the inner wall surface STs, and may rotate the irradiation optical system 234#2 such that the second head apparatus 23#2 emits the processing light EL toward the inner wall surface STs.

When the relative positional relationship between the irradiation optical system 234#2 and the three-dimensional structural object ST is changed, a relative positional relationship between the condensed plane 234FP on which the processing light EL is condensed and the processing target surface PS (especially, a positional relationship along the propagating direction of the processing light EL) may be changed. Consequently, as in the case where the relative positional relationship between the condensed plane 211FP and the processing target surface PS is changed, there is a possibility that the processing target surface PS is not properly smoothed. Therefore, even when the second head apparatus 23#2 is attachable to the lens barrel 214, the processing system SYS may control the relative positional relationship between the condensed plane 234FP and the processing target surface PS such that the processing target surface PS is properly smoothed. That is, the processing system SYS may control the relative positional relationship between the condensed plane 234FP and the processing target surface PS such that the processing target surface PS is properly smoothed, as in the case of controlling the relative positional relationship between the condensed surface 211FP and the processing target surface PS such that the processing target surface PS is properly smoothed.

As described above, the processing system SYS may change the relative positional relationship between the processing head 21 and the three-dimensional structural object ST such that the processing light EL obliquely enters the processing target surface PS. Even when the second head apparatus 23#2 is attachable to the lens barrel 214, the processing system SYS may change the relative positional relationship between the processing head 21 and the three-dimensional structural object target ST such that the processing light EL obliquely enters the processing target surface PS. Alternatively, when the second head PS 23#2 is attachable to the lens barrel 214, the second head EL 23#2 that is configured to emit the processing light EL that obliquely enters the processing target surface PS may be attachable to the lens barrel 214. For example, when the second head target 23#2 is attachable to the lens barrel 214, an incident angle of the processing light EL with respect to the processing target surface PS depends on the deflection optical system 2342#2. For example, when the deflection optical system 2342#2 deflects the processing light EL by reflecting the processing light PS on a reflection surface, the incident angle of the processing light EL with respect to the processing target surface PS depends on an angle of the reflection surface of the deflection optical system 2342#2 (specifically, an angle with respect to the propagating direction of the processing light EL). Therefore, there may be prepared a plurality of second head apparatuses 23#2, each of which includes respective one of a plurality of deflection optical systems 2342#2 with different optical properties (specifically, optical properties related to the deflection direction, and, for example, the angle of the reflection surface), and out of the plurality of second head apparatuses 23#2, one deflection optical system 2342#2 that is capable of deflecting the processing light EL such that the processing light EL obliquely enters the processing target surface PS may be attachable to the lens barrel 214. Consequently, even when the relative positional relationship between the processing head 21 and the three-dimensional structural object apparatus is not changed, the processing light EL obliquely enters the processing target surface PS. Alternatively, when the optical properties of the deflection optical system 2342#2 (e.g., the angle of the reflection surface) are changeable, the processing system SYS may change the optical properties of the deflection optical system 2342#2 such that the processing light EL obliquely enters the processing target surface PS.

As described above, the processing system SYS may perform the welding operation that is an example of the processing operation. The processing system SYS may perform the welding operations even when the second head apparatus 23#2 is attachable to the lens barrel 214. For example, the processing system SYS may weld a first pipe, which is an example of the cylindrical three-dimensional structural object ST, and a second pipe, which is an example of the cylindrical three-dimensional structural object ST. Specifically, the processing system SYS may weld the first and second pipes by inserting the second head apparatus 23#2 to pipe lines of the first and second pipes and by irradiating a boundary of inner wall surfaces of the first and second pipes with the processing light EL.

The second head apparatus 23#2 may also be attachable to the lens barrel 214 in at least a part of the period in which the processing system SYS performs the build operation for forming the three-dimensional structural object ST. That is, the processing system SYS may form the three-dimensional structural object ST by irradiating the workpiece W with the processing light EL emitted from the irradiation optical system 211, through the second head apparatus 23#2. Consequently, the processing system SYS is capable of properly forming the three-dimensional structural object ST even when the second head apparatus 23#2 is attachable to the lens barrel 214. When the second head apparatus 23#2 is attachable to the lens barrel 214, the target supply area MA in which the material nozzle 212 supplies the build materials M may be set in the condensed plane 234FP or in the vicinity of the condensed plane 234FP on which the second head apparatus 23#2 condenses the processing light EL. For example, the processing system SYS may move the material nozzle 212, thereby to change the target supply area MA from in the condensed plane 211FP or in the vicinity of the condensed plane 211FP in which the first head apparatus 23#1 condenses the processing light EL, to in the condensed plane 234FP or in the vicinity of the condensed plane 234FP.

### (4) Modified Example of Second Head Apparatus 23#2

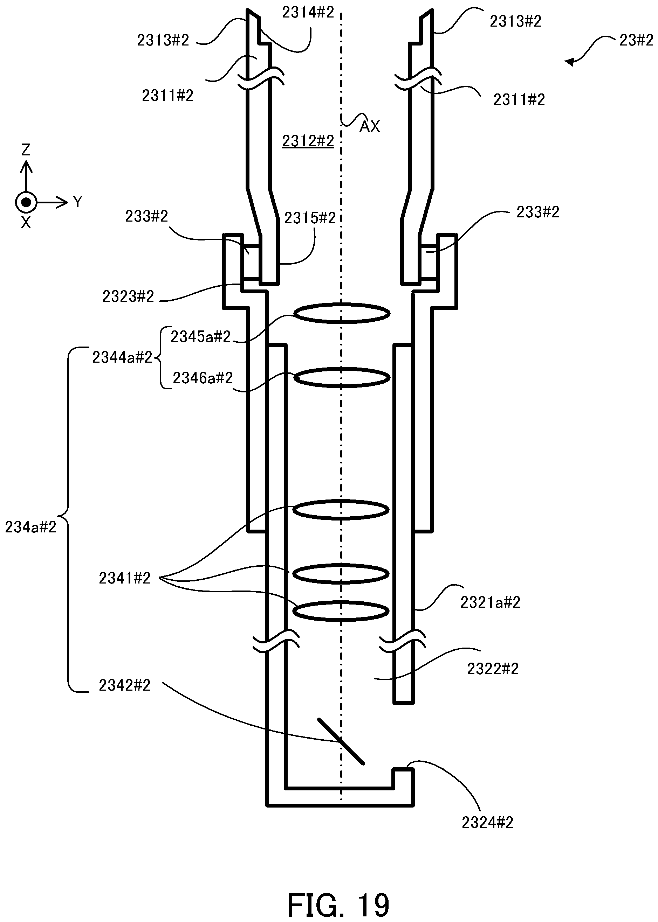

Next, with reference to FIG. 19, a modified example of the second head apparatus 23#2 will be described. FIG. 19 is a cross-sectional view that illustrates a configuration in the modified example of the second head apparatus 23a#2. In the following, the second head apparatus 23#2 in the modified example will be referred to as a "second head apparatus 23a#2" to distinguish it from the second head apparatus 23#2 described above.

As illustrated in FIG. 19, the second head apparatus 23a#2 is different from the second head apparatus 23#2 described above in that it includes a cylindrical member 2321a#2 instead of the cylindrical member 2321#2. Furthermore, the second head apparatus 23a#2 is different from the second head apparatus 23#2 described above in that it includes an irradiation optical system 234a#2 instead of the irradiation optical system 234#2. Other features of the second head apparatus 23a#2 may be the same as those of the second head apparatus 23#2.

The cylindrical member 2321a#2 is different from the cylindrical member 2321#2 it has a telescopic structure (i.e., an extendable and retractable structure). That is, the cylindrical member 2321a#2 is a member obtained by combining a plurality of cylindrical members having different diameters. Therefore, the cylindrical member 2321a#2 is extendable and retractable along a longitudinal direction of the cylindrical member 2321a#2 (the Z-axis direction in the example illustrated in FIG. 19, and the direction along the optical axis AX). Other features of the cylindrical member 2321a#2 may be the same as those of the cylindrical member 2321#2.

The irradiation optical system 234a#2 is different from the irradiation optical system 234#2 in that it includes a parallel optical system 2344a#2. Other features of the irradiation optical system 234a#2 may be the same as those of the irradiation optical system 234#2.

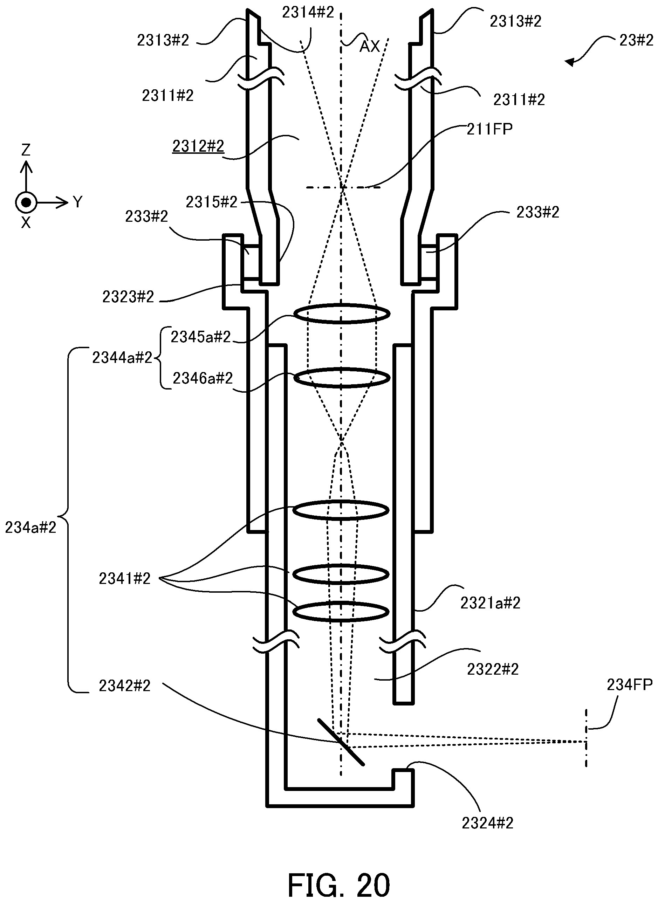

The parallel optical system 2344a#2 is an optical system that is configured to convert the processing light EL emitted as a non-parallel light from the irradiation optical system 211 that is not illustrated, to a parallel light. For example, as illustrated in FIG. 19, the parallel optical system 2344a#2 may include an optical member 2345a#2 and an optical member 2346a#2 that are aligned along the optical axis AX. The optical member 2345a#2 converts the processing light EL emitted as the non-parallel light from the irradiation optical system 211 to the parallel light, as illustrated in FIG. 20 that is a cross-sectional view that illustrates the optical path of the processing light EL. Here, the optical member 2345a#2 is positioned such that a front focal position thereof is on the condensed plane 211FP. The optical member 2346a#2 converts the processing light EL emitted as the parallel light from the optical member 2345a#2, to the non-parallel light, as illustrated in FIG. 20. The processing light EL emitted as the non-parallel light from the optical member 2346a#2 enters the condensing optical system 2341#2. Here, a rear focal position of the optical member 2346a#2 is located on a surface that optically conjugates with the condensed plane 234FP due to the condensing optical system 2341#2.

The parallel optical system 2344a#2 may change a distance between the optical members 2345a#2 and 2346a#2 (specifically, the distance along the optical axis AX). When the distance between the optical members 2345a#2 and 2346a#2 is changed, a length of the optical path of the processing light EL that propagates as the parallel light is changed. At this time, the front focal position of the optical member 2345a#2 may remain on the condensed plane 211FP, and a rear focal position of the optical member 2345a#2 may remain on the surface that optically conjugates with the condensed plane 234FP. Since the front focal position of the optical member 2345a#2 remains on the condensed plane 211FP, the processing light from the optical member 2345a#2 is always the parallel light, and since the rear focal position of the optical member 2345a#2 remains on the surface that optically conjugates with the condensed plane 234FP, the processing light from the optical member 2345a#2 is always condensed on the surface that optically conjugates with the condensed plane 234FP.

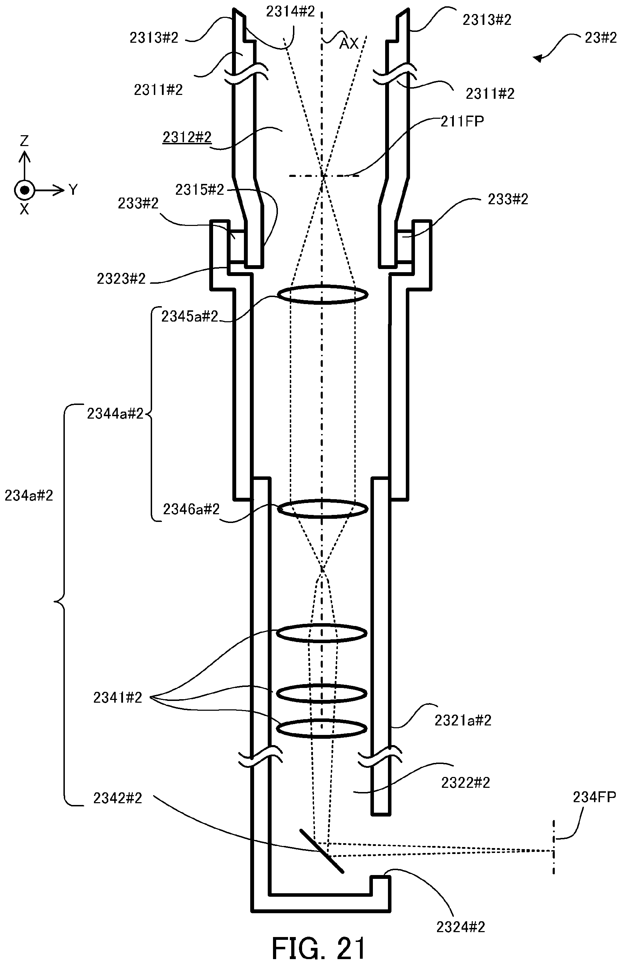

Such a second head apparatus 23a#2 may move the condensed plane 234FP on which the second head apparatus 23a#2 condenses the processing light EL, along the optical axis AX, by extending or retracting the cylinder member 2121a#2 to change the distance between the optical members 2345a#2 and 2346a#2 in accordance with the extension and retraction of the cylindrical member 2321a#2. For example, FIG. 20 illustrates the cylindrical member 2321a#2 that is short (i.e., that is retracted), and FIG. 21 illustrates the cylindrical member 2321a#2 that is long (i.e., that is extended). In this case, as illustrated in FIG. 20, when the cylindrical member 2321a#2 is short, the distance between the optical members 2345a#2 and 2346a#2 is reduced. On the other hand, as illustrated in FIG. 21, when the cylindrical member 2321a#2 is long, the distance between the optical members 2345a#2 and 2346a#2 is increased. Consequently, even when the cylindrical member 2321a#2 is extended or retracted, the second head apparatus 23a#2 is capable of properly condensing the processing light EL on the condensed plane 234FP. At this time, as illustrated in FIG. 20 and FIG. 21, when the condensed plane 234FP moves along the optical axis AX in accordance with the extension and retraction of the cylindrical member 2321a#2, the position of the condensed plane 234FP in a direction perpendicular to the optical axis (in the XY plane) is maintained.

### (5) Other Modified Examples

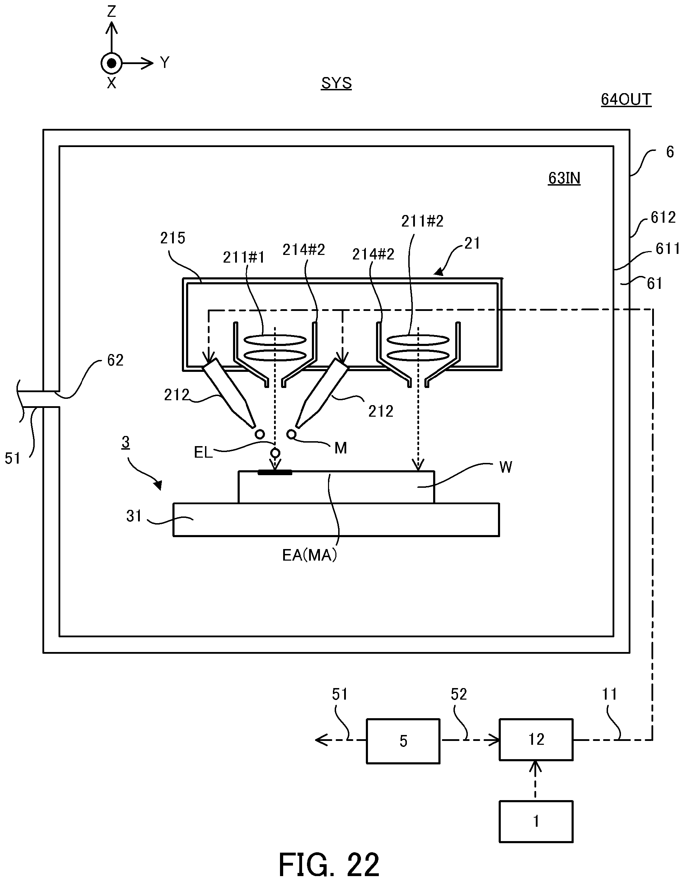

In the above description, the processing system SYS performs both the build operation and the processing operation by using the processing light EL emitted from the same irradiation optical system 211. However, as illustrated in FIG. 22 that illustrates a modified example of the processing system SYS, the processing system SYS may separately include the irradiation optical system 211 that emits the processing light EL for performing the build operation (hereinafter, referred to as an "irradiation optical system 211#1"), and the irradiation optical system 211 that emits the processing light EL for performing the processing operation (hereinafter, referred to as "irradiation optical system 211#2"). In this case, the irradiation optical systems 211#1 and 211#2 may be contained in separate lens barrels 214. The first head apparatus 23#1 described above is attachable to, but the second head apparatus 23#2 may be attachable to, the lens barrel 214 that contains the irradiation optical system 211#1 (hereinafter, referred to as a "lens barrel 214#1"). The second head apparatus 23#2 described above is attachable to, but the first head apparatus 23#1 may be attachable to, the lens barrel 214 that contains the irradiation optical system 211#2 (hereinafter, referred to as a "lens barrel 214#2").

In the above description, the processing system SYS melts the build materials M by irradiating the build materials M with the processing light EL. The processing system SYS, however, may melt the build materials M by irradiating the build materials M with any energy beam. In this case, the processing system SYS may include a beam irradiation optical system that is configured to apply any energy beam, in addition to or instead of the irradiation optical system 211. An example of any energy beam is at least one of a charged particle beam and an electromagnetic wave. An example of the charged particle beam is at least one of an electron beam and an ion beam.

In the above description, the processing system SYS performs the additive processing by the Laser Metal Deposition. The processing system SYS, however, may form the three-dimensional structural object ST from the build materials M in another method in which the three-dimensional structural object ST is formable by irradiating the build materials M with the processing light EL (or any energy beam). Alternatively, the processing system SYS may form the three-dimensional structural object ST in any method for the additive processing, which is different from such a method that the build materials M are irradiated with the processing light EL (or any energy beam).

At least a part of the configuration requirements of each example embodiment described above may be combined with at least another part of the configuration requirements of each example embodiments described above as appropriate. A part of the configuration requirements of each example embodiments described above may not be used. Furthermore, the disclosures of all publications and United States patents cited in each embodiment described above are incorporated in the disclosures of the present application by reference if it is legally permitted.

The present invention is not limited to the example embodiments described above and is allowed to be changed, if desired, without departing from the essence or spirit of the invention which can be read from the claims and the entire specification. A processing system and an optical apparatus with such modifications are also intended to be within the technical scope of the present invention.

### Description of Reference Codes

- SYS: Processing System
- 1: Material supply source
- 2: Processing unit
- 21: Processing head
- 211: Irradiation optical system
- 212: Material nozzle
- 213: Returned light detector
- 214: Lens barrel
- 215: Head housing
- 22: Head driving system
- 23, 23#1, 23#2: Head apparatus
- 234#2: Irradiation optical system
- 2341#2: Condensing optical system
- 2342#2: Deflection optical system
- 3: Stage unit
- 31: Stage
- 32: Stage driving system
- 7: Control apparatus
- W: Workpiece
- M: Build material
- EL: Processing light

## Claims

1. A processing system that is configured to form a build object,
the processing system comprising:
a first optical system that condenses an energy beam on a first irradiation position; and
a material supply apparatus that is configured to supply build materials to the first irradiation position,
the processing system being capable of forming the build object by irradiating the build materials supplied by the material supply apparatus, with the energy beam from the first optical system, and
the processing system processing the build object by a second optical system irradiating a surface of the build object with the energy beam from the first optical system.

2. The processing system according to claim 1, wherein
the second optical system includes a deflection member that deflects the energy beam in a cross direction intersecting with an optical axis of the first optical system,
the processing system further comprises:
a first housing member containing the first optical system; and
a second housing member containing the second optical system,
the second housing member is attachable to and detachable from the first housing member, and
a maximum width of the second housing member in a direction crossing the optical axis of the first optical system is shorter than a maximum width of the first housing member in a direction crossing the optical axis of the first optical system.

3. The processing system according to claim 1 or 2, wherein
the surface of the build object includes a cylindrical inner wall surface facing an optical axis of the second optical system so as to sandwich or surround the optical axis, and
at least a part of the inner wall surface is disposed at a second irradiation position on which the energy beam is condensed by the second optical system, in at least a part of a period in which the surface of the build object is irradiated with the energy beam.

4. The processing system according to any one of claims 1 to 3, further comprising:
a gas supply apparatus that is configured to supply a gas to the second optical system; and
a second housing member that contains the second optical system in a housing space, wherein
the gas supply apparatus supplies a gas to the second optical system by supplying a gas to the housing space.

5. The processing system according to claim 4, wherein
the second optical system includes a plurality of optical members,
a groove extending along a direction in which the plurality of optical members are aligned is formed on an inner wall of the second housing member facing the housing space, and
the gas supplied to the second housing member flows through the groove.

6. The processing system according to any one of claims 1 to 5, wherein
the second optical system includes an imaging optical system.

7. The processing system according to claim 6, wherein
the imaging optical system forms an image of the energy beam that is formed at the first irradiation position by the first optical system, at a second irradiation position.

8. The processing system according to claim 7, wherein
the second irradiation position on which the energy beam is condensed by the second optical system is away from the first irradiation position along a cross direction intersecting with an optical axis of the first optical system.

9. The processing system according to any one of claims 1 to 8, wherein
the second optical system includes a deflection member that deflects the energy beam in a cross direction intersecting with an optical axis of the first optical system.

10. The processing system according to any one of claims 1 to 9, wherein
the processing system further comprises:
a first housing member containing the first optical system; and
a second housing member containing the second optical system, and
the second housing member is attachable to and detachable from the first housing member.

11. The processing system according to claim 10, wherein
a maximum width of the second housing member in a direction crossing an optical axis of the first optical system is shorter than a maximum width of the first housing member in a direction crossing the optical axis of the first optical system.

12. The processing system according to claim 2, 10 or 11, wherein
the second housing member includes:
a first member that is attachable to and detachable from an attachment part of the first housing member; and
a second member that holds the second optical system.

13. The processing system according to claim 12, wherein
a cover member for blocking the build materials is attachable to the attachment part.

14. The processing system according to any one of claim 2 and claims 10 to 13, wherein
when the second housing member is not attached to the first housing member, a processing for forming the build object is possible by irradiating the build materials supplied by the material supply apparatus, with the energy beam from the first optical system, and
when the second housing member is attached to the first housing member, a processing for smoothing a surface of the build object is possible by the second optical system irradiating the surface of the build object with the energy beam from the first optical system.

15. The processing system according to any one of claims 1 to 14, wherein
the second optical system irradiates a surface of the build object with the energy beam such that the energy beam obliquely enters the surface of the build object.

16. The processing system according to any one of claims 1 to 15, further comprising a position change apparatus that is configured to change a relative positional relationship between the second optical system and the build object.

17. The processing system according to claim 16, wherein
the position change apparatus changes the relative positional relationship between the second optical system and the build object while maintaining a relative positional relationship between the first optical system and the build object.

18. The processing system according to claim 16 or 17, wherein
the second optical system is attachable to the first optical system so as to be movable with respect to the first optical system.

19. The processing system according to any one of claims 16 to 18, wherein
the position change apparatus is a first position change apparatus, and
the processing system further comprises a second position change apparatus that is configured to change a relative positional relationship between the first optical system and the build object.

20. The processing system according to claim 19, wherein
the second position change apparatus changes the relative positional relationship between the first optical system and the build object while maintaining a relative positional relationship between the first optical system and the second optical system.

21. The processing system according to any one of claims 1 to 20, wherein
the surface of the build object includes a cylindrical inner wall surface facing an optical axis of the second optical system so as to sandwich or surround the optical axis, and
at least a part of the second optical system is surrounded by at least a part of the inner wall surface, in at least a part of a period in which the surface of the build object is irradiated with the energy beam.

22. The processing system according to any one of claims 1 to 21, wherein
the second optical system includes:
a third optical system that converts the energy beam from the first optical system, to a parallel beam; and
a fourth optical system that irradiates a second irradiation position with the energy beam from the third optical system.

23. The processing system according to claim 22, wherein
the third optical system includes at least two optical members that are capable of changing a distance therebetween in a direction along an optical axis of the second optical system.

24. The processing system according to claim 22 or 23, wherein
the second irradiation position is away from the first irradiation position along a cross direction intersecting with an optical axis of the first optical system, and
the fourth optical system includes a deflection member that irradiates the second irradiation position with the energy beam from the third optical system by deflecting the energy beam from the third optical system along the cross direction.

25. The processing system according to any one of claims 1 to 24, further comprising a gas supply apparatus that is configured to supply a gas to the second optical system.

26. The processing system according to claim 25, further comprising a second housing member that contains the second optical system in a housing space,
the gas supply apparatus supplying a gas to the second optical system by supplying a gas to the housing space.

27. The processing system according to claim 26, wherein
the second optical system includes a plurality of optical members,
a groove extending along a direction in which the plurality of optical members are aligned is formed on an inner wall of the second housing member facing the housing space, and
the gas supplied to the second housing member flows through the groove.

28. The processing system according to claim 5 or 26, wherein
a barrier member, which blocks the gas flowing through the groove between two adjacent optical members, is formed in the groove.

29. The processing system according to any one of claim 4 and claims 26 to 28, wherein
the gas supply apparatus is configured to supply the gas to an internal space of a cover member that is attached to the first housing member containing the first optical system,
an outlet at which the gas supplied to the internal space flows out from the internal space is formed in the cover member,
the material supply apparatus supplies the build materials to the first irradiation position from a material supply port, and
the cover member is disposed such that the outlet is located in a range that is less than or equal to a predetermined distance from the material supply port.

30. A processing system comprising:
a first optical system that irradiates an object with an energy beam;
a first housing member that contains the first optical system;
a material supply apparatus that is configured to supply build materials to an irradiation position of the energy beam from the first optical system; and
a second housing member that is attachable to the first housing member and that contains a second optical system condensing the energy beam from the first optical system.

31. A processing system comprising:
a first optical system that irradiates an object with an energy beam;
a first housing member that contains the first optical system; and
a material supply apparatus that is configured to supply build materials to an irradiated position of the energy beam from the first optical system,
an attachment part for attaching, to the first housing member, a second housing member that contains a second optical system that condenses the energy beam from the first optical system, being formed in the first housing member.

32. A processing system comprising:
a first optical system that irradiates an object with an energy beam; and
a first housing member that contains the first optical system,
an attachment part for attaching, to the first housing member, a second housing member that contains a second optical system that condenses the energy beam from the first optical system, being formed in the first housing member.

33. An optical apparatus that is attachable to a processing system configured to form a build obj ect,
the processing system including:
a first optical system that condenses an energy beam on a first irradiation position; and
a material supply apparatus that is configured to supply build materials to the first irradiation position,
the processing system forming a build object by supplying the build materials from the material supply apparatus and by using the energy beam from the first optical system,
the optical apparatus including a second optical system for processing the build object by irradiating a surface of the build object with the energy beam from the first optical system.

34. An optical apparatus that is attachable to a processing system,
the processing system including: a first optical system that irradiates an object with an energy beam; a first housing member that contains the first optical system; and a material supply apparatus that is configured to supply build materials to an irradiation position of the energy beam from the first optical system,
the optical apparatus including a second housing member that is attachable to the first housing member and that contains a second optical system condensing an energy beam from the first optical system.

35. A processing system that is configured to form a build object,
the processing system comprising:
a first processing apparatus including: a first optical system that condenses an energy beam on a first irradiation position; and a material supply apparatus that is configured to supply build materials to the first irradiation position, the first processing apparatus being capable of forming the build object by irradiating the build materials supplied by the material supply apparatus, with the energy beam from the first optical system; and
a second processing apparatus that is configured to process the build object by irradiating a surface of the build object with an energy beam by using a second optical system.
